(19) Europäisches Patentamt / European Patent Office / Office européen des brevets

(11) **EP 4 600 228 A1**

(12) **EUROPEAN PATENT APPLICATION**
published in accordance with Art. 153(4) EPC

(43) Date of publication:
**13.08.2025 Bulletin 2025/33**

(21) Application number: **24759788.3**

(22) Date of filing: **23.02.2024**

(51) International Patent Classification (IPC):
*C03C 15/00* (2006.01)  *C03C 10/04* (2006.01)
*C03C 10/12* (2006.01)  *G02B 1/118* (2015.01)
*G02B 1/11* (2015.01)

(86) International application number:
**PCT/CN2024/078420**

(87) International publication number:
**WO 2024/175116 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **24.02.2023 CN 202310164166**

(71) Applicant: **Chongqing Aureavia Hi-Tech Glass Co., Ltd.**
**Chongqing 400714 (CN)**

(72) Inventors:
• YUE, Jianhong
  Chongqing 400714 (CN)
• HUANG, Hao
  Chongqing 400714 (CN)
• LIU, Zhiqiang
  Chongqing 400714 (CN)
• HUANG, Wentao
  Chongqing 400714 (CN)

(74) Representative: **Aseglio-Gianinet, Romina et al**
**Jacobacci & Partners S.p.A.**
**Corso Emilia, 8**
**10152 Torino (IT)**

(54) **GLASS CERAMIC HAVING MOTH-EYE-LIKE STRUCTURE, PREPARATION METHOD AND USE**

(57)    The present application discloses a glass ceramic having a moth-eye-like structure, a preparation method and a use. The glass ceramic having a moth-eye-like structure comprises a glass-ceramic substrate and a moth-eye-like structure layer arranged on the main surface of the glass-ceramic substrate, and the moth-eye-like structure layer and the glass-ceramic substrate are integrated; the moth-eye-like structure layer comprises a plurality of nano-scale protruding structures; the moth-eye-like structure layer is obtained by carrying out surface etching treatment on the main surface of the glass-ceramic substrate by using an etching solution; the main crystal phase of the glass-ceramic substrate comprises petalite and lithium silicate; and preferably, the main crystal phase comprises petalite, lithium monosilicate and lithium disilicate, or the main crystal phase comprises petalite and lithium disilicate.

**FIG. 3**

## Description

### CROSS-REFERENCE TO RELATED APPLICATION

The present invention claims the priority to the Chinese patent application with the filing No. 202310164166.6 filed on February 24, 2023 with the Chinese Patent Office, and entitled "MICROCRYSTALLINE GLASS HAVING MOTH-EYE-LIKE STRUCTURES AND PREPARATION METHOD THEREFOR", the contents of which are incorporated herein by reference in entirety.

### TECHNICAL FIELD

The present invention relates to the technical field of glass, and specifically to microcrystalline glass having moth-eye-like structures, a preparation method and use.

### BACKGROUND ART

As an external protective barrier for many optical devices and equipment, glass can effectively avoid water and other harmful substances from directly contacting and damaging instrument and equipment, and can provide a visual effect as a transparent window for optical propagation. However, as glass and air have different coefficients of refraction for light, Fresnel reflection phenomenon will occur at a place where a glass-air interface is formed, thus affecting transmittance of light in the glass.

Researches find that regularly ordered nanometer sub-wave structures can form a smooth gradient refractive index at an interface of two different media, so as to effectively inhibit the Fresnel reflection phenomenon, and achieve an antireflection effect. Inspired by biology, moth eyes structure is applied to glass surface modification due to a broadband antireflection effect thereof, so as to solve the problem that the transmittance of light in glass is affected by the Fresnel reflection phenomenon. Researches demonstrate that the moth eye is a compound eye structure, and is covered by a layer of convex structures on a surface, which convex structures can diffuse irradiated light towards different directions. According to optical theory analysis, the convex structures on the moth eye surface can be equivalent to that a surface refractive index gradually changes downwards along a material surface, thus effectively addressing the occurrence of reflection phenomenon due to abrupt change caused by different refractive indexes of light in air and the material.

Regarding preparation of bionic moth-eye/moth-eye-like micro-nano structures on a glass surface, existing methods mainly include a wet etching technology, a nanoimprinting technology, etc., while the glass having the moth-eye-like structures obtained by these methods fails to have an ideal antireflection effect, the glass with the bionic moth-eye structure/the glass having the moth-eye-like structures having high transmittance is difficult to ensure, and the methods mostly have shortcomings such as difficult control or high cost. For example, the nanoimprinting technology needs to be assisted by photoresist, and the micro-nano structures on a template also need to be transferred to the glass surface, so that the preparation process is complex, the production cost is high, and the micro-nano structures are easy to fall off in use due to different materials of the micro-nano structures and the glass material, thus causing the moth-eye-like structures to fail. In the wet etching technology, in order to realize controllable manufacturing of the moth-eye micro-nano structures, technicians usually choose to perform masking on the glass surface, so as to form regular metal ion distribution on the glass surface, and further realize selective etching in an etching process utilizing acid resistance of metal ions, so as to finally form the regular moth-eye micro-nano structures on the glass surface, but such preparation process is also relatively complex, and has high production cost, which is adverse to large-scale production.

### SUMMARY

Regarding the above shortcomings existing in the prior art, the present invention aims at providing microcrystalline glass having moth-eye-like structures, a preparation method and use, so as to solve the technical problems in the prior art that the glass having the moth-eye-like structures is complex in preparation process, the moth-eye-like structures are easy to fail, the production cost is high, it is not conducive to large-scale production and the antireflection effect is insufficient.

In order to solve the above technical problems, the present invention uses technical solutions as follows.

In the first aspect, the present invention provides microcrystalline glass having moth-eye-like structures, including a microcrystalline glass substrate and a moth-eye-like structure layer provided on a main surface of the microcrystalline glass substrate, and the moth-eye-like structure layer being integrated with the microcrystalline glass substrate, where the moth-eye-like structure layer includes a plurality of nanoscale convex structures.

For the microcrystalline glass having the moth-eye-like structures provided in the present invention, the moth-eye-like structure layer is obtained by performing a surface etching treatment on the main surface of the microcrystalline glass substrate using an etching solution.

For the microcrystalline glass having the moth-eye-like structures provided in the present invention, the microcrystalline glass having the moth-eye-like structures has a moth-eye-like structure layer on two main surfaces.

For the microcrystalline glass having the moth-eye-like structures provided in the present invention, main crystalline phases of the microcrystalline glass substrate include petalite and lithium silicate; preferably, the main crystalline phases include petalite, lithium monosilicate and lithium disilicate, or the main crystalline phases include petalite and lithium disilicate.

For the microcrystalline glass having the moth-eye-like structures provided in the present invention, a crystallinity of the microcrystalline glass substrate is greater than or equal to 30.00 wt%, preferably greater than or equal to 35.00 wt%, further preferably greater than or equal to 40.00 wt%, preferably 35.00 wt%-95.00 wt%, preferably 40.00 wt%-95.00 wt%, preferably 50.00 wt%-95.00 wt%, and more preferably 60.00-95.00 wt%.

For the microcrystalline glass having the moth-eye-like structures provided in the present invention, an average grain size of the microcrystalline glass substrate is 10.00 nm-30.00 nm, preferably 12.00 nm-30.00 nm, preferably 13.60 nm-25.40 nm, and more preferably 15.20 nm-25.40 nm.

For the microcrystalline glass having the moth-eye-like structures provided in the present invention, the etching solution includes, in percentage by mass, components as follows: 0.01%-16.00% of an acid solution, 0%-18.00% of an additive, and balance being water; preferably, the acid solution includes hydrofluoric acid, and more preferably, the hydrofluoric acid has a concentration greater than or equal to 40.00 wt%; preferably, the additive includes one or more of barium sulfate, silica sand, and cellulose; more preferably, the barium sulfate has a particle size less than 2 mm, and purity greater than 98%; more preferably, the silica sand has a particle size of 0.01-2.5 mm, and purity greater than 99.9%; more preferably, the cellulose has a molecular weight of 50,000-150,000, and a proportion of crystalline phase greater than 60 wt%; further preferably, the additive includes 0-6.00% of barium sulfate, 0-6.00% of silica sand and 0-6.00% of cellulose.

For the microcrystalline glass having the moth-eye-like structures provided in the present invention, a bottom surface of the nanoscale convex structure is in an ellipse-like shape, and has a long axis A and a short axis B, the nanoscale convex structure has a height of h in a vertical direction, and the nanoscale convex structure meets the following relational expression in a space coordinate system $(x_1, y_1, z_1)$:

$$z_1 = h - h(\frac{4x_1^2}{A^2} + \frac{4y_1^2}{B^2}) \quad (1),$$

where in expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height

$$\frac{x_1^2}{A^2} + \frac{y_1^2}{B^2} < 0.25$$

h, and ; $0 < |x_1| < A/2$, $0 < |y_1| < B/2$, and $0 < z_1$.

For the microcrystalline glass having the moth-eye-like structures provided in the present invention, the long axis A of the bottom surface of the nanoscale convex structure is within a range of 12.0 nm-65.0 nm, preferably 15.00 nm-63.00 nm, and preferably 16.00 nm-60.00 nm; the short axis B of the bottom surface of the nanoscale convex structure is within a range of 10.0 nm-63.0 nm, preferably 11.00 nm-61.0 nm, preferably 13.00 nm-60.00 nm, and more preferably 14.70 nm-60.00 nm; and the height h of the nanoscale convex structure in the vertical direction is within a range of 4.50 nm-76.00 nm, preferably 4.85 nm-75.40 nm, preferably 5.00 nm-70.00 nm, and more preferably 6.00 nm-70.00 nm.

For the microcrystalline glass having the moth-eye-like structures provided in the present invention, in the moth-eye-like structure layer, a distance L between the bottom surfaces of two adjacent nanoscale convex structures is within a range of 0 nm-155.00 nm, preferably 0 nm-131.00 nm, and more preferably 0 nm-114.00 nm.

For the microcrystalline glass having the moth-eye-like structures provided in the present invention, as measured on a surface of the moth-eye-like structure layer on the main surface, when the microcrystalline glass having the moth-eye-like structures has a thickness of 0.64 mm, transmittance in light with a wavelength of 550.00 nm is greater than or equal to 91.00%, preferably greater than or equal to 93.00%, preferably greater than or equal to 95.00%, preferably greater than or equal to 95.50%, preferably greater than or equal to 96.00%, more preferably 91.00%-99.00%, and more preferably 95.00%-99.00%.

For the microcrystalline glass having the moth-eye-like structures provided in the present invention, the microcrystalline glass substrate includes, in percentage by mass of oxides, components as follows:

$SiO_2$: 70.00%-80.00%;
$Al_2O_3$: 5.00%-10.00%;

Li$_2$O: 5.00%-15.00%;
ZrO$_2$: 0%-5.00%;
P$_2$O$_5$: 0%-5.00%;
B$_2$O$_3$: 0%-5.00%;
Na$_2$O: 0%-5.00%.

In the second aspect, the present invention provides a preparation method for the above microcrystalline glass having the moth-eye-like structures, including a step of: performing a surface etching treatment on the main surface of the microcrystalline glass substrate using an etching solution so as to obtain the microcrystalline glass having the moth-eye-like structures.

In the preparation method provided in the present invention, the etching solution includes, in percentage by mass, components as follows: 0.01%-16.00% of an acid solution, 0%-18.00% of an additive, and balance being water; preferably, the acid solution includes hydrofluoric acid, and more preferably, the hydrofluoric acid has a concentration greater than or equal to 40.00 wt%; preferably, the additive includes one or more of barium sulfate, silica sand, and cellulose; more preferably, the barium sulfate has a particle size less than 2 mm, and purity greater than 98%; more preferably, the silica sand has a particle size of 0.01-2.5 mm, and purity greater than 99.9%; more preferably, the cellulose has a molecular weight of 50,000-150,000, and a proportion of crystalline phase greater than 60 wt%; and further preferably, the additive includes 0-6.00% of barium sulfate, 0-6.00% of silica sand and 0-6.00% of cellulose.

In the preparation method provided in the present invention, the surface etching treatment includes: performing an ultrasonic etching reaction on the microcrystalline glass substrate in the etching solution, and after ending the reaction, taking out the microcrystalline glass substrate, and performing a cleaning treatment and a drying treatment in sequence, so as to obtain the microcrystalline glass having the moth-eye-like structures; preferably, a temperature of the etching solution is 10-80 °C; and preferably, the ultrasonic etching reaction is performed for 10-180 min.

In the preparation method provided in the present invention, the main crystalline phases of the microcrystalline glass substrate include petalite and lithium silicate; and preferably, the main crystalline phases include petalite, lithium monosilicate and lithium disilicate, or include petalite and lithium disilicate.

In the preparation method provided in the present invention, a crystallinity of the microcrystalline glass substrate is greater than or equal to 30.00 wt%, preferably greater than or equal to 35.00 wt%, further preferably greater than or equal to 40.00 wt%, preferably 35.00 wt%-95.00 wt%, preferably 40.00 wt%-95.00 wt%, preferably 50.00 wt%-95.00 wt%, and more preferably 60.00-95.00 wt%.

In the preparation method provided in the present invention, an average grain size of the microcrystalline glass substrate is 10.00 nm-30.00 nm, preferably 12.00 nm-30.00 nm, preferably 13.60 nm-25.40 nm, and more preferably 15.20 nm-25.40 nm.

In the preparation method provided in the present invention, a bottom surface of the nanoscale convex structure is in an ellipse-like shape, and has a long axis A and a short axis B, the nanoscale convex structure has a height of h in a vertical direction, and the nanoscale convex structure meets the following relational expression in a space coordinate system ($x_1$, $y_1$, $z_1$):

$$z_1 = h - h\left(\frac{4x_1{}^2}{A^2} + \frac{4y_1{}^2}{B^2}\right) \quad (1),$$

where in expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height h, and

$$\frac{x_1{}^2}{A^2} + \frac{y_1{}^2}{B^2} < 0.25$$

; 0<|$x_1$|<A/2, 0<|$y_1$|<B/2, and 0<$z_1$.

In the preparation method provided in the present invention, the long axis A of the bottom surface of the nanoscale convex structure is within a range of 12.0 nm-65.0 nm, preferably 15.00 nm-63.00 nm, and preferably 16.00 nm-60.00 nm; the short axis B of the bottom surface of the nanoscale convex structure is within a range of 10.0 nm-63.0 nm, preferably 11.00 nm-61.0 nm, preferably 13.00 nm-60.00 nm, and more preferably 14.70 nm-60.00 nm; and the height h of the nanoscale convex structure in the vertical direction is within a range of 4.50 nm-76.00 nm, preferably 4.85 nm-75.40 nm, preferably 5.00 nm-70.00 nm, and more preferably 6.00 nm-70.00 nm.

In the preparation method provided in the present invention, in the moth-eye-like structure layer, a distance L between the bottom surfaces of two adjacent nanoscale convex structures is within a range of 0 nm-155.00 nm, preferably 0 nm-131.00 nm, and more preferably 0 nm-114.00 nm.

In the preparation method provided in the present invention, the microcrystalline glass substrate includes, in percentage by mass of oxides, components as follows:

$SiO_2$: 70.00%-80.00%;
$Al_2O_3$: 5.00%-10.00%;
$Li_2O$: 5.00%-15.00%;
$ZrO_2$: 0%-5.00%;
$P_2O_5$: 0%-5.00%;
$B_2O_3$: 0%-5.00%;
$Na_2O$: 0%-5.00%.

In the preparation method provided in the present invention, as measured on a surface of the moth-eye-like structure layer on the main surface, when the microcrystalline glass having the moth-eye-like structures has a thickness of 0.64 mm, transmittance in light with a wavelength of 550.00 nm is greater than or equal to 91.00%, preferably greater than or equal to 93.00%, preferably greater than or equal to 95.00%, preferably greater than or equal to 95.50%, preferably greater than or equal to 96.00%, more preferably 91.00%-99.00%, and more preferably 95.00%-99.00%.

In the third aspect, the present invention provides use of the above microcrystalline glass having the moth-eye-like structures or the microcrystalline glass having the moth-eye-like structures prepared by the above preparation method in an electronic product, where preferably, the electronic product is one or more of a display glass cover plate, a solar photovoltaic glass substrate, and an LED light-emitting device glass substrate.

Compared with the prior art, the present invention has the following beneficial effects.

1. The present invention accidently finds that a moth-eye-like layer of a specific structure can be obtained on a microcrystalline glass surface by performing a surface etching treatment on a microcrystalline glass substrate with a specific crystalline phase system using an etching solution, and further the microcrystalline glass having moth-eye-like structures can be obtained, and the microcrystalline glass having the moth-eye-like structures has high transmittance in a visible light range.

2. The present invention finds that the obtained moth-eye-like structures, i.e., the nanoscale convex structures, meet the specific relational expression in the space coordinate system $(x_1, y_1, z_1)$.

3. By adjusting the crystallinity of the microcrystalline glass substrate, the average grain size and other structures, or by adjusting the long axis A, the short axis B, and the height h of the nanoscale convex structures in the moth-eye-like structures and the distance L between the bottom surfaces of adjacent nanoscale convex structures, the transmittance of the microcrystalline glass having the moth-eye-like structures obtained after the etching treatment in the visible light range can be improved.

4. The present invention provides a method for producing the microcrystalline glass having the moth-eye-like structures in a large scale with a simple process at a low cost, and such preparation method enables the moth-eye-like structures to be integrated with the microcrystalline glass substrate, can effectively prevent the moth-eye-like structures from falling off.

## BRIEF DESCRIPTION OF DRAWINGS

FIG. 1 is a schematic diagram of microcrystalline glass having moth-eye-like structures according to the present invention and antireflection principle thereof.

FIG. 2 is a schematic view of distance L and height h of the moth-eye-like structures according to the present invention.

FIG. 3 is an AFM image of the moth-eye-like structures of an etched microcrystalline glass substrate in Example 18.

FIG. 4 is an XRD spectrogram of a microcrystalline glass substrate in Example 9, with petalite, lithium monosilicate and lithium disilicate as main crystalline phases.

FIG. 5 is an XRD spectrogram of a microcrystalline glass substrate in Example 19, with petalite and lithium disilicate as main crystalline phases.

FIG. 6 is a surface SEM image of the etched microcrystalline glass substrate in Example 18.

FIG. 7 is a surface SEM image of an etched common glass substrate in Comparative Example 1.

FIG. 8 is a surface SEM image of an etched microcrystalline glass substrate in Comparative Example 2, with petalite and lithium disilicate as main crystalline phases.

FIG. 9 is distribution charts of A value and B value in Example 18.

## DETAILED DESCRIPTION OF EMBODIMENTS

Technical solutions in the embodiments of the present invention will be described clearly and completely in conjunction with the drawings in the embodiments of the present invention. Apparently, the embodiments described are only some but not all embodiments of the present invention. All of other embodiments obtained by those of ordinary skill in the art based on the present invention fall within the scope of protection of the present invention.

Unless otherwise indicated in specific instances in the present invention, a numerical range listed herein includes upper and lower limits, as well as all integers and fractions within that range, and is not limited to specific values listed within the defined range. As used herein, "and/or" is inclusive, for example, "A; and/or B" means only A, or only B, or both A and B.

Relevant special names and relevant measurement methods involved in the present invention are explained as follows.

Microcrystalline glass, also known as glass-ceramic, is a solid composite material that includes both glass phase and crystalline phase, and is prepared by targeted controlled crystallization of substrate glass. It is to be noted that the crystalline phase herein is also called as crystal phase, microcrystalline phase or crystallization phase in other patent documents.

In the present invention, a microcrystalline glass substrate refers to microcrystalline glass without surface etching treatment.

Crystalline phase: the crystalline phase is a microscopic structure of crystal, determined by conformation of polymer chains in the crystal and arrangement thereof.

Crystallinity: it is percentage of total mass of crystals/crystalline phases/grains in a total mass of microcrystalline glass. It should be appreciated that the crystalline phases and the grains both refer to crystals precipitated from the microcrystalline glass.

Transmittance: it is a ratio of radiation energy projected and transmitted through an object to total radiation energy projected onto the object in a process of incident light flux leaving from an irradiated surface or a medium incident surface to the other surface.

The term "providing" as used in the present invention refers to forming a specific structure by performing an etching treatment on a microcrystalline glass substrate by any etching method known in the art.

Moth-eye-like structure: it is also called as a bionic moth-eye structure, referring to a structure similar to a compound eye of a moth.

The moth-eye-like structure in the present invention is a nanoscale convex structure irregularly arranged and having specific features formed on a surface of a microcrystalline glass substrate after performing an etching treatment on the surface of the microcrystalline glass substrate using an etching solution, and it is in a rugby-like shape.

An etching reaction mechanism of the present invention is that a glass phase in the microcrystalline glass substrate reacts with HF, and such reaction includes reaction between HF and $SiO_2$, and reaction between HF and metal oxides in the glass phase. For example, the following reactions take place:

$$SiO_2 + 4HF = SiF_4\uparrow + 2H_2O;$$

$$Al_2O_3 + 6HF = 2AlF_3 + 3H_2O;$$

$$Na_2O + 2HF = 2NaF + H_2O.$$

A reaction product $SiF_4$ is generally in a gaseous state, and is partially volatilized, and partially dissolved in solution to further react, for example, the following reactions take place:

$$4SiF_4 + 2HF + 3H_2O = 3H_2SiF_6 + H_2SiO_3;$$

$$3SiF_4 + 2AlF_3 = Al_2(SiF_6)_3;$$

$$SiF_4 + 2NaF = Na_2SiF_6.$$

Finally in the present invention, the glass phase on the surface of the microcrystalline glass substrate is consumed by corrosion, leaving behind acid-resistant crystalline substances, such as petalite, lithium monosilicate and lithium disilicate, and nanoscale convex structures having specific distribution and specific morphology are formed on the surface of the microcrystalline glass substrate, that is, a moth-eye-like structure layer having a specific structure is formed.

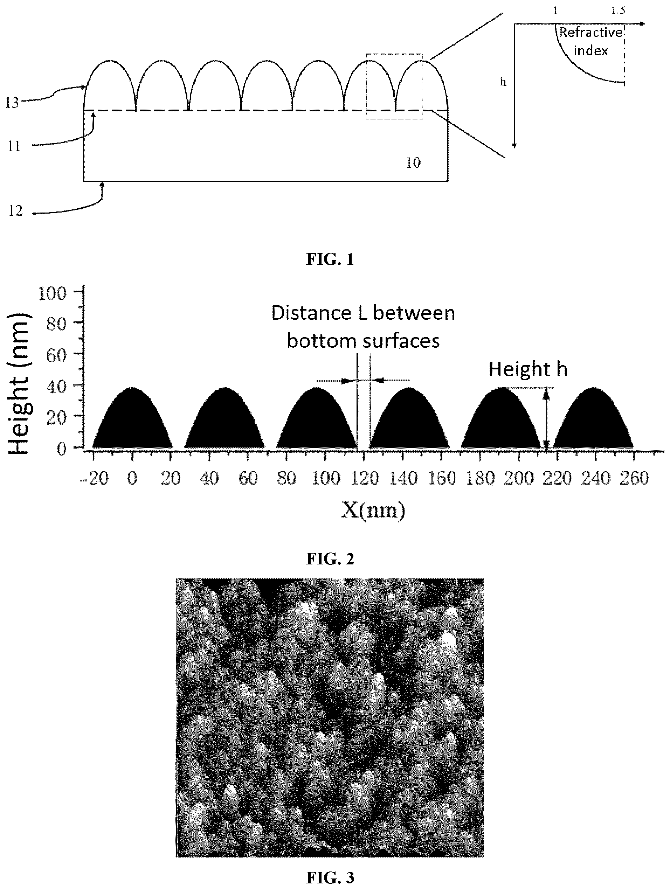

In some embodiments, the microcrystalline glass having the moth-eye-like structures in the present invention includes a microcrystalline glass substrate and a moth-eye-like structure layer provided on a main surface of the microcrystalline glass substrate, where the moth-eye-like structure layer is integrated with the microcrystalline glass substrate; and the moth-eye-like structure layer is obtained by performing a surface etching treatment on the main surface of the microcrystalline glass substrate using an etching solution. As shown in FIG. 1, the microcrystalline glass substrate 10 includes main surfaces 11 and 12 opposite to each other; and a moth-eye-like structure layer 13 is provided on the main surface 11 of the microcrystalline glass substrate.

In some embodiments, the etching solution according to the present invention includes, in percentage by mass, the following components: 0.01%-16.00% of an acid solution, 0%-18.00% of an additive, and the balance being water.

Further, the acid solution includes hydrofluoric acid, where the hydrofluoric acid preferably has a concentration greater than or equal to 40.00 wt%.

Further, the additive includes one or more of barium sulfate, silica sand, and cellulose. Preferably, the barium sulfate has a particle size less than 2 mm, and purity greater than 98%. Preferably, the silica sand has a particle size of 0.01-2.5 mm, and purity greater than 99.9%. Preferably, the cellulose has a molecular weight of 50,000-150,000, and a proportion of crystalline phase greater than 60 wt%. More preferably, the additive includes 0-6.00% of barium sulfate, 0-6.00% of silica sand and 0-6.00% of cellulose.

Further, the additive preferably includes 0-6.00% of barium sulfate, 0-6.00% of silica sand and 0-6.00% of cellulose.

The present invention finds that a structure and crystalline phase system of the microcrystalline glass substrate have certain relation with optical properties of the microcrystalline glass having the moth-eye-like structures obtained after etching, and such relation is linked by the moth-eye-like structures. The present invention finds that, after the microcrystalline glass substrate including a specific crystalline phase system has undergone the surface etching treatment with the etching solution, irregularly arranged, rugby-like nanoscale convex structures are formed on the surface of the microcrystalline glass substrate, and such structures are just the moth-eye-like structures, as shown in FIG. 3. These nanoscale convex structures randomly irregularly arranged and distributed can form a gradient refractive index between the glass and air, thus effectively increasing the transmittance of the microcrystalline glass to visible light, as shown in FIG. 1, the refractive index changes in a gradient, that is, gradually changing from 1 to 1.5, thus realizing a high transmission effect of visible light on the microcrystalline glass having the moth-eye-like structures.

In some embodiments, main crystalline phases of the microcrystalline glass substrate include petalite, lithium monosilicate and lithium disilicate, or include petalite and lithium disilicate.

Upon further in-depth researches, the present invention finds that the microcrystalline glass substrate having different crystallinities with specific main crystalline phases can bring about different improvement effects to the transmittance of the microcrystalline glass having the moth-eye-like structures obtained after the etching in the visible light range, where a low crystallinity tends to increase little the transmittance of the microcrystalline glass having the moth-eye-like structures, because the low crystallinity indicates a low content of the main crystalline phases in the microcrystalline glass substrate, and the nanoscale convex structures of the microcrystalline glass substrate formed after the etching are not sufficiently uniformly distributed and are few in number, thus improving little the transmittance of the microcrystalline glass having the moth-eye-like structures in the visible light range.

In some embodiments, the crystallinity of the microcrystalline glass substrate in the present invention is preferably greater than or equal to 30.00 wt%, preferably greater than or equal to 35.00 wt%, preferably greater than or equal to 40.00 wt%, further preferably greater than or equal to 50.00 wt%, preferably 35.00 wt%-95.00 wt%, preferably 40.00 wt%-95.00 wt%, preferably 50.00 wt%-95.00 wt%, more preferably 60.00-95.00 wt%, preferably 50.00 wt%-86.00 wt%, more preferably 60.00 wt%-86.00 wt; and may also be 60.00 wt%-70.00 wt%, 60.00 wt%-80.00 wt%, 68.00 wt%-84.00 wt%, 63.00 wt%-77.00 wt%, 70.00 wt%-90.00 wt%, 75.00 wt%-85.00 wt%, 80.00 wt%-90.00 wt%, 10 wt%, 12 wt%, 20 wt%, 30 wt%, 35.00 wt%, 40.00 wt%, 50.00 wt%, 60.00 wt%, 65.00 wt%, 70.00 wt%, 75.00 wt%, 80.00 wt%, 86.00 wt%, 90.00 wt%, 95.00 wt%, etc., and within all ranges and sub-ranges between the above values. It should be appreciated that in embodiments, any of the above ranges can be combined with any other ranges.

In addition, the present invention finds that distribution of an average grain size of the microcrystalline glass substrate having the specific main crystalline phases also follows similar rule. If the average grain size is too small, the formed nanoscale convex structures will be small in size, and the small-size nanoscale convex structures will be distributed quite sparsely, thus weakening the gradient change of the refractive index, and improving little the transmittance of the microcrystalline glass having the moth-eye-like structures in the visible light range.

In some embodiments, the average grain size of the microcrystalline glass substrate in the present invention is 10.00 nm-30.00 nm, preferably 12.00 nm-30.00 nm, more preferably 15.00 nm-30.00 nm; and may also be 10.00 nm-20.00 nm, 13.00 nm-30.00 nm, 20.00 nm-30.00 nm, 18.00 nm-27.00 nm, 16.00 nm-28.00 nm, 19.00 nm-26.00 nm, 12.20 nm, 13.60 nm, 14.80 nm, 15.00 nm, 15.20 nm, 15.60 nm, 15.80 nm, 16.70 nm, 16.90 nm, 17.20 nm, 17.40 nm, 18.00 nm, 18.50 nm, 18.60 nm, 19.50 nm, 20.00 nm, 21.20 nm, 22.60 nm, 22.80 nm, 23.00 nm, 23.30 nm, 24.20 nm, 25.00 nm, 25.40 nm, 27.00 nm, 30.00 nm, etc., and within all ranges and sub-ranges between the above values. It should be appreciated that in embodiments, any of the above ranges can be combined with any other ranges.

The present invention further studies the nanoscale convex structures of the obtained microcrystalline glass having the moth-eye-like structures. A bottom surface of each nanoscale convex structure in the present invention is in an ellipse-like shape, and has a long axis A and a short axis B, the nanoscale convex structure has a height of h in a vertical direction, and the nanoscale convex structure meets the following relational expression in a space coordinate system ($x_1$, $y_1$, $z_1$):

$$z_1 = h - h(\frac{4x_1^2}{A^2} + \frac{4y_1^2}{B^2}) \quad (1).$$

In expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height h, and $\dfrac{x_1^2}{A^2} + \dfrac{y_1^2}{B^2} < 0.25$ ; $0<|x_1|<A/2$, $0<|y_1|<B/2$, and $0<z_1$.

In the present invention, a process of obtaining expression (1) is as follows.

1. A test surface is randomly selected from an etched surface of a microcrystalline glass sample having the moth-eye-like structures using an atomic force microscope (AFM); and surface morphology raw data of the microcrystalline glass having the moth-eye-like structures in the present invention are obtained.

2. The obtained raw data are imported into Gwyddion software, and a cross section is selected for analysis. From the analysis, the long axis A of the bottom surface of the nanoscale convex structure, the short axis B of the bottom surface of the nanoscale convex structure and the height h of the nanoscale convex structure in the vertical direction can be obtained. It should be appreciated that, by analyzing the bottom surface of the nanoscale convex structure, the long axis A and the short axis B can be obtained; and by analyzing two cross sections perpendicular to the bottom surface of the nanoscale convex structure in the directions of the long axis A and the short axis B, the height h of the nanoscale convex structure in the vertical direction can be obtained;

3. The obtained raw data are imported again into origin software, to construct a 3D topographic image with a large number of nanoscale convex structures, which topographic image is exactly identical with the topographic image in the Gwyddion software;

4. The 3D topographic image obtained in the origin software is processed to obtain a projection on z=0 plane, so as to obtain patterns of bottom surfaces of a plurality of nanoscale convex structures, where the patterns of bottom surfaces of these nanoscale convex structures are in an ellipse-like shape, and it is found through fitting that the bottom surfaces of the nanoscale convex structures meet a relational expression in a horizontal plane coordinate system (x, y):

$$\frac{x^2}{A^2} + \frac{y^2}{B^2} < 0.25 .$$

In the above relational expression, midpoints of the long axis A and the short axis B are taken as an origin, A=B or A≠B; x is a variable in a direction of the long axis A, y is a variable in a direction of the short axis B, $0<|x|<A/2$, and $0<|y|<B/2$.

5. Taking the above horizontal plane coordinate system as a base, curve fitting is performed on the nanoscale convex structures in the obtained 3D topographic image in the space coordinate system, and it is found that the nanoscale convex structures meet the following relational expression in the space coordinate system ($x_1$, $y_1$, $z_1$):

$$z_1 = h - h(\frac{4x_1^2}{A^2} + \frac{4y_1^2}{B^2}) \quad (1).$$

In expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of

the height h, $\dfrac{x_1^2}{A^2} + \dfrac{y_1^2}{B^2} < 0.25$ , $0<|x_1|<A/2$, $0<|y_1|<B/2$, and $0<z_1$.

In the present invention, the raw data obtained by the above atomic force microscope are imported into the Gwyddion software, and a cross section is selected for analysis. By analyzing the bottom surfaces of adjacent nanoscale convex structures, the distance L between the bottom surfaces of adjacent nanoscale convex structures can also be obtained. It should be appreciated that the distance L between the bottom surfaces of the adjacent nanoscale convex structures specifically refers to a distance between intersection points of a center connection line of the bottom surfaces of two adjacent nanoscale convex structures and edge lines of the bottom surfaces of the two adjacent nanoscale convex structures close to each other, specifically as shown in FIG. 2.

When visible light passes through the above nanoscale convex structures, most of the light will transmit through these nanoscale convex structures, while a small amount of light may be reflected on side surfaces of these nanoscale convex structures, and reflected light thereof may be irradiated as new incident light on side surfaces of adjacent nanoscale convex structures, to repeat the preceding reflection and transmission processes, thus increasing a transmission amount of whole light. Therefore, the microcrystalline glass having the nanoscale convex structures meeting the relational expression (1) has increased transmittance.

In some embodiments, the long axis A of the bottom surface of each nanoscale convex structure is within a range of 12.0 nm-65.0 nm, and may also be 12.00 nm-60.00 nm, 12.00 nm-55.00 nm, 12.00 nm-50.00 nm, 14.00 nm-55.00 nm, 17.00 nm-55.00 nm, 20.00 nm-55.00 nm, 20.00 nm-60.00 nm, 25.00 nm-55.00 nm, 25.00 nm-60.00 nm, 12.80 nm, 14.00 nm, 14.80 nm, 15.00 nm, 15.60 nm, 15.90 nm, 16.00 nm, 16.70 nm, 17.20 nm, 18.50 nm, 19.00 nm, 20.90 nm, 21.40 nm, 22.90 nm, 23.00 nm, 24.20 nm, 25.00 nm, 26.40 nm, 27.40 nm, 28.70 nm, 30.70 nm, 32.50 nm, 33.40 nm, 33.70 nm, 34.70 nm, 35.00 nm, 35.80 nm, 36.40 nm, 40.00 nm, 41.40 nm, 42.60 nm, 43.60 nm, 47.00 nm, 50.00 nm, 55.00 nm, 59.00 nm, 60.00 nm, 61.70 nm, 62.50 nm, 63.00 nm, 64.00 nm, 65.00 nm, etc., and within all ranges and sub-ranges between the above values. It should be appreciated that in embodiments, any of the above ranges can be combined with any other ranges.

In some embodiments, the short axis B of the bottom surface of each nanoscale convex structure is within a range of 10.0 nm-63.0 nm, and may also be 10.00 nm-60.00 nm, 13.00 nm-50.00 nm, 13.00 nm-55.00 nm, 15.00 nm-55.00 nm, 17.00 nm-55.00 nm, 20.00 nm-60.00 nm, 20.00 nm-55.00 nm, 25.00 nm-60.00 nm, 25.00 nm-55.00 nm, 16.00 nm-55.00 nm, 11.00 nm, 11.80 nm, 12.00 nm, 13.00 nm, 13.90 nm, 14.70 nm, 15.30 nm, 15.70 nm, 16.00 nm, 16.80 nm, 17.50 nm, 18.00 nm, 19.00 nm, 20.40 nm, 21.80 nm, 22.20 nm, 23.40 nm, 23.90 nm, 24.00 nm, 24.80 nm, 25.50 nm, 27.40 nm, 27.0 nm, 28.00 nm, 29.00 nm, 30.00 nm, 31.20 nm, 32.00 nm, 33.00 nm, 34.10 nm, 35.00 nm, 37.40 nm, 38.00 nm, 40.50 nm, 43.40 nm, 44.20 nm, 47.00 nm, 50.00 nm, 55.00 nm, 59.00 nm, 60.00 nm, 60.70 nm, 61.00 nm, 62.00 nm, 63.00 nm, etc., and within all ranges and sub-ranges between the above values. It should be appreciated that in embodiments, any of the above ranges can be combined with any other ranges.

In some embodiments, the height h of each nanoscale convex structure in the vertical direction is within a range of 4.50 nm-76.00 nm, and may also be 5.00 nm-76.00 nm, 5.00 nm-70.00 nm, 5.00 nm-60.00 nm, 6.00 nm-70.00 nm, 7.00 nm-68.00 nm, 7.00 nm-65.00 nm, 7.50 nm-55.00 nm, 4.85 nm, 5.01 nm, 5.24 nm, 5.45 nm, 6.23 nm, 6.74 nm, 7.02 nm, 8.41 nm, 9.00 nm, 10.00 nm, 15.00 nm, 17.00 nm, 20.00 nm, 25.00 nm, 30.00 nm, 35.00 nm, 37.41 nm, 38.65 nm, 40.00 nm, 43.66 nm, 45.00 nm, 47.60 nm, 48.00 nm, 49.00 nm, 50.00 nm, 51.20 nm, 54.10 nm, 56.70 nm, 58.70 nm, 61.40 nm, 62.10 nm, 65.00 nm, 67.70 nm, 69.80 nm, 70.00 nm, 73.20 nm, 75.40 nm, 76.00 nm, etc., and within all ranges and sub-ranges between the above values. It should be appreciated that in embodiments, any of the above ranges can be combined with any other ranges.

In some embodiments, in the moth-eye-like structure layer, the distance L between the bottom surfaces of two adjacent nanoscale convex structures is within a range of 0 nm-155.00 nm, preferably, 0 nm-150.00 nm, and may also be 0 nm-130.00 nm, 0 nm-124.00 nm, 0 nm-114.00 nm, 0 nm-104.00 nm, 0 nm-95.00 nm, 0 nm-80.00 nm, 0 nm-76.50 nm, 0 nm-74.40 nm, 0 nm-73.20 nm, 0 nm-71.10 nm, 0 nm-67.40 nm, 0 nm-62.50 nm, 0 nm-54.40 nm, 0 nm-40.00 nm, 0 nm-35.40 nm, 0 nm-33.50 nm, 0 nm-31.90 nm, 0 nm-30.10 nm, 0 nm-30.00 nm, etc.

In some embodiments, as measured on a surface of the moth-eye-like structure layer on the main surface in the present invention, when the microcrystalline glass having the moth-eye-like structures has a thickness of 0.64 mm, the transmittance in light with a wavelength of 550.00 nm is greater than or equal to 91.00%, preferably greater than or equal to 93.00%, preferably greater than or equal to 95.00%, more preferably greater than or equal to 96.00%, and may also be 95.00%-96.00%, 96.00%-97.00%, 97.00%-98.00%, 95.50%-96.50%, 95.50%-99.50%, 91.00%, 92.00%, 93.00%, 94.00%, 95.0%, 95.50%, 96.00%, 96.50%, 97.00%, 97.50%, 98.00%, 98.50%, 99.00%, etc., and within all ranges and sub-ranges between the above values. It should be appreciated that in embodiments, any of the above ranges can be combined with any other ranges.

In some embodiments, the microcrystalline glass substrate in the present invention includes, in percentage by mass of oxides, the following components:

$SiO_2$: 70.00%-80.00%;
$Al_2O_3$: 5.00%-10.00%;
$Li_2O$: 5.00%-15.00%;
$ZrO_2$: 0%-5.00%;
$P_2O_5$: 0%-5.00%;

$B_2O_3$: 0%-5.00%;
$Na_2O$: 0%-5.00%.

$SiO_2$, as a glass network-forming oxide, is an indispensable component in constructing a glass network structure. In the present invention, a content of $SiO_2$ is 70.00%-80.00%, 71.00%-73.00%, 71.00%-75.00%, 73.00%-75.50%, 72.50%-78.60%, 71.50%-76.90%, 74.50%-78.60%, 71.00%, 72.00%, 73.00%, 74.00%, 75.00%, 76.00%, 77.00%, 78.00%, 79.00%, 80.00%, etc., and within all ranges and sub-ranges between the above values.

$Al_2O_3$, as a glass-forming intermediate oxide, can improve chemical stability of glass. In the present invention, a content of $Al_2O_3$ is 5.00%-10.00%, 5.00%-6.00%, 5.00%-7.00%, 5.00%-8.00%, 5.00%-9.00%, 6.00%-7.00%, 6.00%-8.00%, 7.00%-9.00%, 7.00%-10.00%, 8.00%-9.00%, 8.00%-10.00%, 9.00%-10.00%, 5.00%, 6.00%, 7.00%, 8.00%, 9.00%, 10.00%, etc., and within all ranges and sub-ranges between the above values.

A content of $Li_2O$ is 5.00%-15.00%, 5.00%-8.00%, 5.00%-10.00%, 5.00%-11.00%, 5.00%-14.00%, 6.00%-9.00%, 6.00%-12.00%, 7.00%-14.00%, 8.00%-11.00%, 9.00%-15.00%, 8.00%-13.00%, 6.00%-11.00%, 5.00%, 6.00%, 8.00%, 9.00%, 10.00%, 11.00%, 12.00%, 13.00%, 14.00%, 15.00%, etc., and within all ranges and sub-ranges between the above values.

$ZrO_2$ has a large accumulation effect on the glass structure due to high cationic charge and high field strength thereof, and acts as a nucleating agent in a glass base material; at the same time, $ZrO_2$ can also increase strength and toughness of the microcrystalline glass and improve acid and alkali corrosion resistance thereof. In the present invention, a content of $ZrO_2$ is 0%-5.00%, 0%-1.00%, 0%-2.00%, 1.00%-4.00%, 1.00%-3.00%, 1.50%-4.50%, 2.80%-3.70%, 1.90%-3.50%, 1.40%-4.90%, 0%, 1.00%, 2.00%, 3.00%, 4.00%, 5.00%, etc., and within all ranges and sub-ranges between the above values.

$P_2O_5$, as a glass-forming oxide, exists in the network structure in the form of phosphorus-oxide tetrahedron $[PO_4]$. $P_2O_5$ has a fluxing effect, and can also effectively inhibit precipitation of coarse $ZrO_2$ crystals. In the present invention, a content of $P_2O_5$ is 0%-5.00%, 0%-1.00%, 0%-2.00%, 1.00%-4.00%, 1.00%-3.00%, 1.50%-4.50%, 2.80%-3.70%, 1.90%-3.50%, 1.40%-4.90%, 0%, 1.00%, 2.00%, 3.00%, 4.00%, 5.00%, etc., and within all ranges and sub-ranges between the above values.

$B_2O_3$ is conducive to reducing a melting temperature of base-material glass. In the present invention, a content of $B_2O_3$ is 0%-5.00%, 0%-1.00%, 0%-2.00%, 1.00%-4.00%, 1.00%-3.00%, 1.50%-4.50%, 2.80%-3.70%, 1.90%-3.50%, 1.40%-4.90%, 0%, 1.00%, 2.00%, 3.00%, 4.00%, 5.00%, etc., and within all ranges and sub-ranges between the above values.

$Na_2O$, as a glass network-modifying oxide, can provide free oxygen to increase an oxygen-silicon ratio in the glass structure, break bonds, increase a thermal expansion coefficient of the glass, and play an important role in adjusting the grain size, crystalline phase composition, crystalline phase proportion, etc. In the present invention, a content of $Na_2O$ is 0%-5.00%, 0%-1.00%, 0%-2.00%, 1.00%-4.00%, 1.00%-3.00%, 1.50%-4.50%, 2.80%-3.70%, 1.90%-3.50%, 1.40%-4.90%, 0%, 1.00%, 2.00%, 3.00%, 4.00%, 5.00%, etc., and within all ranges and sub-ranges between the above values.

In some embodiments, the preparation method for the microcrystalline glass substrate in the present invention may include but is not limited to the following steps: mixing raw materials according to a formulation, melting and molding, annealing and cooling, molding methods including a float method, overflowing, rolling, casting, etc., so as to obtain the base-material glass.

In some embodiments, the microcrystalline glass substrate in the present invention is prepared by performing a thermal treatment on the base-material glass, where the thermal treatment includes a nucleation treatment and/or a crystallization treatment. It should be appreciated that, when performing the thermal treatment on the base-material glass, one-step thermal treatment or two-step or multi-step thermal treatment may be performed. If the one-step thermal treatment is performed, it means that the nucleation treatment is not separately performed, while nucleation and target crystal growth are directly performed in a one-step heating process, which can be understood as directly performing the crystallization treatment. If the two-step thermal treatment is performed, it means that a two-step heating process is performed, in which the nucleation treatment, i.e., a nucleating treatment, is firstly performed, and then a target crystal growth treatment, i.e., the crystallization treatment, is performed. In some embodiments, the thermal treatment may include (i) heating pre-nucleated crystallizable glass to a nucleation temperature ($T_0$) at a rate of l-10 °C/min; (ii) keeping the crystallizable glass at the nucleation temperature for a duration of about 60 min to 300 min, so as to form nucleated crystallizable glass; (iii) heating the nucleated crystallizable glass to a crystallization temperature ($T_1$) at a rate of 1-10 °C/min; and (iv) keeping the nucleated crystallizable glass at the crystallization temperature for a duration of about 5 min to 240 min.

In some embodiments, the main crystalline phases of the microcrystalline glass substrate in the present invention include petalite, lithium monosilicate and lithium disilicate, or the main crystalline phases include petalite and lithium disilicate; and the crystallinity of the microcrystalline glass substrate is 35.00 wt%-95.00 wt%, preferably 35.00 wt%-90.00 wt%, preferably 40.00 wt%-90.00 wt%, preferably 50.00 wt%-85.00 wt%, preferably 60.00 wt%-90 wt%, preferably 60.00 wt%-80 wt%, more preferably 60.00 wt%-70.00 wt%, more preferably 80.00 wt%-85.00 wt%; and may also be 60.00 wt%-70.00 wt%, 63.00 wt%-77.00 wt%, 65.00 wt%-75.00 wt%, 68.00 wt%-84.00 wt%, 69.00 wt%-83.00 wt%, 35.00 wt%, 40.00 wt%, 50.00 wt%, 60.00 wt%, 65.00 wt%, 70.00 wt%, 75.00 wt%, 80.00 wt%, 85.00 wt%, 90.00 wt%, 95.00 wt%, etc., and within all ranges and sub-ranges between the above values. It should be appreciated that in embodiments, any of the above ranges can be combined with any other ranges.

In some embodiments, the main crystalline phases of the microcrystalline glass substrate in the present invention include petalite, lithium monosilicate and lithium disilicate, or the main crystalline phases include petalite and lithium disilicate; and an average grain size of the microcrystalline glass substrate is 10.00 nm-30.00 nm, preferably 12.00 nm-30.00 nm, preferably 13.60 nm-25.40 nm, preferably 15.20 nm-25.40 nm, and may also be 10.00 nm-20.00 nm, 13.00 nm-30.00 nm, 15.00 nm-30.00 nm, 25.00 nm-30.00 nm, 18.00 nm-27.00 nm, 16.00 nm-28.00 nm, 19.00 nm-26.00 nm, 12.00 nm, 13.60 nm, 14.80 nm, 15.00 nm, 15.20 nm, 15.60 nm, 15.80 nm, 16.70 nm, 16.90 nm, 17.20 nm, 17.40 nm, 18.00 nm, 18.50 nm, 18.60 nm, 19.50 nm, 20.00 nm, 21.20 nm, 22.60 nm, 22.80 nm, 23.00 nm, 23.30 nm, 24.20 nm, 25.00 nm, 25.40 nm, 27.00 nm, 30.00 nm, etc., and within all ranges and sub-ranges between the above values. It should be appreciated that in embodiments, any of the above ranges can be combined with any other ranges.

In some embodiments, the main crystalline phases of the microcrystalline glass substrate in the present invention include petalite, lithium monosilicate and lithium disilicate, or the main crystalline phases include petalite and lithium disilicate; and as measured on the surface of the moth-eye-like structure layer on the main surface, when the microcrystalline glass having the moth-eye-like structures has the thickness of 0.64 mm, the transmittance in light with the wavelength of 550.00 nm is greater than or equal to 91.00%, preferably greater than or equal to 93.00%, preferably greater than or equal to 95.00%, more preferably greater than or equal to 96.00%, and may also be 95.00%-96.00%, 96.00%-97.00%, 97.00%-98.00%, 95.50%-96.50%, 95.50%-99.50%, 91.00%, 92.00%, 93.00%, 94.00%, 95.00%, 95.50%, 96.00%, 96.50%, 97.00%, 97.50%, 98.00%, 98.50%, 99.00%, etc., and within all ranges and sub-ranges between the above values. It should be appreciated that in embodiments, any of the above ranges can be combined with any other ranges.

In some embodiments, the main crystalline phases of the microcrystalline glass substrate in the present invention include petalite, lithium monosilicate and lithium disilicate, or the main crystalline phases include petalite and lithium disilicate; and a bottom surface of each nanoscale convex structure is in an ellipse-like shape, and has a long axis A and a short axis B, the nanoscale convex structure has a height of h in a vertical direction, and the nanoscale convex structure meets the following relational expression in a space coordinate system $(x_1, y_1, z_1)$:

$$z_1 = h - h\left(\frac{4x_1^2}{A^2} + \frac{4y_1^2}{B^2}\right) \ (1).$$

In expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height h, $\frac{x_1^2}{A^2} + \frac{y_1^2}{B^2} < 0.25$, $0 < |x_1| < A/2$, $0 < |y_1| < B/2$, and $0 < z_1$.

In some embodiments, the main crystalline phases of the microcrystalline glass substrate in the present invention include petalite, lithium monosilicate and lithium disilicate, or the main crystalline phases include petalite and lithium disilicate; the long axis A of the bottom surface of each nanoscale convex structure is within a range of 12.0 nm-65.0 nm, preferably 15.00 nm-63.00 nm, preferably 16.00 nm-60.00 nm, more preferably 18.50 nm-60.00 nm, preferably 21.40 nm-60.00 nm; the short axis B of the bottom surface of each nanoscale convex structure is within a range of 10.0 nm-63.0 nm, preferably 11.00 nm-61.0 nm, preferably 13.00 nm-60.00 nm, and more preferably 14.70 nm-60.00 nm; and the height h of the nanoscale convex structure in the vertical direction is within a range of 4.50 nm-76.00 nm, preferably 4.85 nm-75.40 nm, preferably 5.00 nm-70.00 nm, and more preferably 6.00 nm-70.00 nm.

In some embodiments, the main crystalline phases of the microcrystalline glass substrate in the present invention include petalite, lithium monosilicate and lithium disilicate, or the main crystalline phases include petalite and lithium disilicate; and in the moth-eye-like structure layer, the distance L between the bottom surfaces of two adjacent nanoscale convex structures is within a range of 0 nm-155.00 nm; preferably 0 nm-131.00 nm, and more preferably 0 nm-114.00 nm.

In some embodiments, the main crystalline phases of the microcrystalline glass substrate in the present invention include petalite, lithium monosilicate and lithium disilicate; the crystallinity of the microcrystalline glass substrate is 60.00 wt%-85.00 wt%, preferably 60.00 wt%-80.00 wt%, and preferably 60.00 wt%-70.00 wt%; the average grain size of the microcrystalline glass substrate is 15.0 nm-25.40 nm, preferably 15.20 nm-25.40 nm, preferably 15.60 nm-25.40 nm, and preferably 16.70 nm-25.40 nm; and as measured on the surface of the moth-eye-like structure layer on the main surface, when the microcrystalline glass having the moth-eye-like structures has the thickness of 0.64 mm, the transmittance in light with the wavelength of 550.00 nm is 95.00%-99.00%.

In some embodiments, the main crystalline phases of the microcrystalline glass substrate in the present invention include petalite and lithium disilicate, the crystallinity is 60.00 wt%-85.00 wt%, preferably 60.00 wt%-80.00 wt%, and preferably 60.00 wt%-70.00 wt%, and the average grain size of the microcrystalline glass substrate is 15.00 nm-25.40 nm, preferably 15.20 nm-25.40 nm, and more preferably 15.60 nm-25.40 nm; and as measured on the surface of the moth-eye-like structure layer on the main surface, when the microcrystalline glass having the moth-eye-like structures has the thickness of 0.64 mm, the transmittance in light with the wavelength of 550.00 nm is 95.00%-99.00%.

In some embodiments, the main crystalline phases of the microcrystalline glass substrate in the present invention include petalite, lithium monosilicate and lithium disilicate, or the main crystalline phases include petalite and lithium disilicate; the crystallinity of the microcrystalline glass substrate is 60.00 wt%-85.00 wt%, preferably 60.00 wt%-80.00 wt%, and preferably 60.00 wt%-70.00 wt%; the average grain size of the microcrystalline glass substrate is 15.0 nm-25.40 nm, preferably 15.20 nm-25.40 nm, preferably 15.60 nm-25.40 nm, and preferably 16.70 nm-25.40 nm; the long axis A of the bottom surface of each nanoscale convex structure is within a range of 14.80 nm-63.00 nm, and preferably 17.50 nm-62.50 nm; the short axis B of the bottom surface of each nanoscale convex structure is within a range of 13.90 nm-61.00 nm, preferably 15.00-59.00 nm; the height h of each nanoscale convex structure in the vertical direction is within a range of 6.00 nm-75.00 nm; and in the moth-eye-like structure layer, the distance L between bottom surfaces of two adjacent nanoscale convex structures is 0 nm-76.50 nm, preferably 0 nm-75.00 nm.

In some embodiments, the main crystalline phases of the microcrystalline glass substrate in the present invention include petalite, lithium monosilicate and lithium disilicate, or the main crystalline phases include petalite and lithium disilicate; the long axis A of the bottom surface of each nanoscale convex structure is within a range of 14.80 nm-63.00 nm, preferably 17.50 nm-62.50 nm; the short axis B of the bottom surface of each nanoscale convex structure is within a range of 13.90 nm-61.00 nm, preferably 15.00-59.00 nm; the height h of each nanoscale convex structure in the vertical direction is within a range of 6.00 nm-75.00 nm; in the moth-eye-like structure layer, the distance L between bottom surfaces of two adjacent nanoscale convex structures is within a range of 0 nm-76.50 nm, preferably 0 nm-75.00 nm; and as measured on the surface of the moth-eye-like structure layer on the main surface, when the microcrystalline glass having the moth-eye-like structures has the thickness of 0.64 mm, the transmittance in 550.00 nm light is 95.00%-99.00%.

The present invention further provides a preparation method for the microcrystalline glass having the moth-eye-like structures as described above, including the following step: performing a surface etching treatment on a main surface of a microcrystalline glass substrate using an etching solution so as to obtain the microcrystalline glass having the moth-eye-like structures.

Further, the etching solution includes, in percentage by mass, the following components: 0.01%-16.00% of an acid solution, 0%-18.00% of an additive, and the balance being water. Preferably, the acid solution includes hydrofluoric acid, and more preferably, a concentration of the hydrofluoric acid is greater than or equal to 40.00 wt%. Preferably, the additive includes one or more of barium sulfate, silica sand, and cellulose; and more preferably, the barium sulfate has a particle size less than 2 mm, and purity greater than 98%. More preferably, the silica sand has a particle size of 0.01-2.5 mm, and purity greater than 99.9%. More preferably, the cellulose has a molecular weight of 50,000-150,000, and a proportion of crystalline phase greater than 60 wt%. More preferably, the additive includes 0-6.00% of barium sulfate, 0-6.00% of silica sand and 0-6.00% of cellulose.

Further, the surface etching treatment includes: performing an ultrasonic etching reaction on the microcrystalline glass substrate in the etching solution, and after ending the reaction, taking out the microcrystalline glass substrate, and performing a cleaning treatment and a drying treatment in sequence, so as to obtain the microcrystalline glass having the moth-eye-like structures. Preferably, the etching solution has a temperature of 10-80 °C. Preferably, the ultrasonic etching reaction is performed for 10-180 min.

Further, the crystallinity of the microcrystalline glass substrate is preferably greater than or equal to 30.00 wt%, preferably greater than or equal to 35.00 wt%, preferably greater than or equal to 40.00 wt%, further preferably greater than or equal to 50.00 wt%, preferably 35.00 wt%-95.00 wt%, preferably 40.00 wt%-95.00 wt%, preferably 50.00 wt%-95.00 wt%, preferably 60.00-95.00 wt%, preferably 50.00 wt%-86.00 wt%, more preferably 60.00 wt%-86.00wt; and may also be 60.00 wt%-70.00 wt%, 60.00 wt%-80.00 wt%, 68.00 wt%-84.00 wt%, 63.00 wt%-77.00 wt%, 70.00 wt%-90.00 wt%, 75.00 wt%-85.00 wt%, 80.00 wt%-90.00 wt%, 10 wt%, 12 wt%, 20 wt%, 30 wt%, 35.00 wt%, 40.00 wt%, 50.00 wt%, 60.00 wt%, 65.00 wt%, 70.00 wt%, 75.00 wt%, 80.00 wt%, 86.00 wt%, 90.00 wt%, 95.00 wt%, etc., and within all ranges and sub-ranges between the above values. It should be appreciated that in embodiments, any of the above ranges can be combined with any other ranges.

Further, the average grain size of the microcrystalline glass substrate is 10.00 nm-30.00 nm, preferably 12.00 nm-30.00 nm, more preferably 15.00 nm-30.00 nm; and may also be 10.00 nm-20.00 nm, 13.00 nm-30.00 nm, 20.00 nm-30.00 nm, 18.00 nm-27.00 nm, 16.00 nm-28.00 nm, 19.00 nm-26.00 nm, 12.20 nm, 13.60 nm, 14.80 nm, 15.00 nm, 15.20 nm, 15.60 nm, 15.80 nm, 16.70 nm, 16.90 nm, 17.20 nm, 17.40 nm, 18.00 nm, 18.50 nm, 18.60 nm, 19.50 nm, 20.00 nm, 21.20 nm, 22.60 nm, 22.80 nm, 23.00 nm, 23.30 nm, 24.20 nm, 25.00 nm, 25.40 nm, 27.00 nm, 30.00 nm, etc., and within all ranges and sub-ranges between the above values. It should be appreciated that in embodiments, any of the above ranges can be combined with any other ranges.

Further, the bottom surface of each nanoscale convex structure is in an ellipse-like shape, and has a long axis A and a short axis B, the nanoscale convex structure has a height of h in a vertical direction, and the nanoscale convex structure meets the following relational expression in a space coordinate system $(x_1, y_1, z_1)$:

$$z_1 = h - h(\frac{4x_1^2}{A^2} + \frac{4y_1^2}{B^2}) \quad (1).$$

In expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height h, and $\frac{x_1^2}{A^2} + \frac{y_1^2}{B^2} < 0.25$ ; $0 < |x_1| < A/2$, $0 < |y_1| < B/2$, and $0 < z_1$.

Further, the long axis A of the bottom surface of each nanoscale convex structure is within a range of 12.0 nm-65.0 nm, and may also be 12.00 nm-60.00 nm, 12.00 nm-55.00 nm, 12.00 nm-50.00 nm, 14.00 nm-55.00 nm, 17.00 nm-55.00 nm, 20.00 nm-55.00 nm, 20.00 nm-60.00 nm, 25.00 nm-55.00 nm, 25.00 nm-60.00 nm, 12.80 nm, 14.00 nm, 14.80 nm, 15.00 nm, 15.60 nm, 15.90 nm, 16.00 nm, 16.70 nm, 17.20 nm, 18.50 nm, 19.00 nm, 20.90 nm, 21.40 nm, 22.90 nm, 23.00 nm, 24.20 nm, 25.00 nm, 26.40 nm, 27.40 nm, 28.70 nm, 30.70 nm, 32.50 nm, 33.40 nm, 33.70 nm, 34.70 nm, 35.00 nm, 35.80 nm, 36.40 nm, 40.00 nm, 41.40 nm, 42.60 nm, 43.60 nm, 47.00 nm, 50.00 nm, 55.00 nm, 59.00 nm, 60.00 nm, 61.70 nm, 62.50 nm, 63.00 nm, 64.00 nm, 65.00 nm, etc., and within all ranges and sub-ranges between the above values. It should be appreciated that in embodiments, any of the above ranges can be combined with any other ranges.

Further, the short axis B of the bottom surface of each nanoscale convex structure is within a range of 10.0 nm-63.0 nm, and may also be 10.00 nm-60.00 nm, 13.00 nm-50.00 nm, 13.00 nm-55.00 nm, 15.00 nm-55.00 nm, 17.00 nm-55.00 nm, 20.00 nm-60.00 nm, 20.00 nm-55.00 nm, 25.00 nm-60.00 nm, 25.00 nm-55.00 nm, 16.00 nm-55.00 nm, 11.00 nm, 11.80 nm, 12.00 nm, 13.00 nm, 13.90 nm, 14.70 nm, 15.30 nm, 15.70 nm, 16.00 nm, 16.80 nm, 17.50 nm, 18.00 nm, 19.00 nm, 20.40 nm, 21.80 nm, 22.20 nm, 23.40 nm, 23.90 nm, 24.00 nm, 24.80 nm, 25.50 nm, 27.40 nm, 27.0 nm, 28.00 nm, 29.00 nm, 30.00 nm, 31.20 nm, 32.00 nm, 33.00 nm, 34.10 nm, 35.00 nm, 37.40 nm, 38.00 nm, 40.50 nm, 43.40 nm, 44.20 nm, 47.00 nm, 50.00 nm, 55.00 nm, 59.00 nm, 60.00 nm, 60.70 nm, 61.00 nm, 62.00 nm, 63.00 nm, etc., and within all ranges and sub-ranges between the above values. It should be appreciated that in embodiments, any of the above ranges can be combined with any other ranges.

Further, the height h of each nanoscale convex structure in the vertical direction is within a range of 4.50 nm-76.00 nm, and may also be 5.00 nm-76.00 nm, 5.00 nm-70.00 nm, 5.00 nm-60.00 nm, 6.00 nm-70.00 nm, 7.00 nm-68.00 nm, 7.00 nm-65.00 nm, 7.50 nm-55.00 nm, 4.85 nm, 5.01 nm, 5.24 nm, 5.45 nm, 6.23 nm, 6.74 nm, 7.02 nm, 8.41 nm, 9.00 nm, 10.00 nm, 15.00 nm, 17.00 nm, 20.00 nm, 25.00 nm, 30.00 nm, 35.00 nm, 37.41 nm, 38.65 nm, 40.00 nm, 43.66 nm, 45.00 nm, 47.60 nm, 48.00 nm, 49.00 nm, 50.00 nm, 51.20 nm, 54.10 nm, 56.70 nm, 58.70 nm, 61.40 nm, 62.10 nm, 65.00 nm, 67.70 nm, 69.80 nm, 70.00 nm, 73.20 nm, 75.40 nm, 76.00 nm, etc., and within all ranges and sub-ranges between the above values. It should be appreciated that in embodiments, any of the above ranges can be combined with any other ranges.

Further, in the moth-eye-like structure layer, the distance L between bottom surfaces of two adjacent nanoscale convex structures is within a range of 0 nm-155.00 nm; preferably 0 nm-150.00 nm, and may also be 0 nm-130.00 nm, 0 nm-124.00 nm, 0 nm-114.00 nm, 0 nm-104.00 nm, 0 nm-95.00 nm, 0 nm-80.00 nm, 0 nm-76.50 nm, 0 nm-74.40 nm, 0 nm-73.20 nm, 0 nm-71.10 nm, 0 nm-67.40 nm, 0 nm-62.50 nm, 0 nm-54.40 nm, 0 nm-40.00 nm, 0 nm-35.40 nm, 0 nm-33.50 nm, 0 nm-31.90 nm, 0 nm-30.10 nm, 0 nm-30.00 nm, etc.

Further, as measured on the surface of the moth-eye-like structure layer on the main surface, when the microcrystalline glass having the moth-eye-like structures has the thickness of 0.64 mm, transmittance in light with a wavelength of 550.00 nm is greater than or equal to 91.00%, preferably greater than or equal to 93.00%, preferably greater than or equal to 95.00%, more preferably greater than or equal to 96.00%, and may also be 95.00%-96.00%, 96.00%-97.00%, 97.00%-98.00%, 95.50%-96.50%, 95.50%-99.50%, 91.00%, 92.00%, 93.00%, 94.00%, 95.0%, 95.50%, 96.00%, 96.50%, 97.00%, 97.50%, 98.00%, 98.50%, 99.00% etc., and within all ranges and sub-ranges between the above values. It should be appreciated that in embodiments, any of the above ranges can be combined with any other ranges.

Further, the microcrystalline glass substrate includes, in percentage by mass of oxides, the following components:

$SiO_2$: 70.00%-80.00%;
$Al_2O_3$: 5.00%-10.00%;

$Li_2O$: 5.00%-15.00%;
$ZrO_2$: 0%-5.00%;
$P_2O_5$: 0%-5.00%;
$B_2O_3$: 0%-5.00%;
$Na_2O$: 0%-5.00%.

Further, main crystalline phases of the microcrystalline glass substrate include petalite, lithium monosilicate and lithium disilicate, or the main crystalline phases include petalite and lithium disilicate; the crystallinity of the microcrystalline glass substrate is preferably 35.00 wt%-95.00 wt%, preferably 40.00 wt%-95.00 wt%, preferably 50.00 wt%-95.00 wt%, preferably 60.00-95.00 wt%, preferably 50.00 wt%-85.00 wt%, preferably 60.00 wt%-90 wt%, preferably 60.00 wt%-80 wt%, more preferably 60.00 wt%-70.00 wt%, and more preferably 80.00 wt%-85.00 wt%; and may also be 60.00 wt%-70.00 wt%, 63.00 wt%-77.00 wt%, 65.00 wt%-75.00 wt%, 68.00 wt%-84.00 wt%, 69.00 wt%-83.00 wt%, 35.00 wt%, 40.00 wt%, 50.00 wt%, 60.00 wt%, 65.00 wt%, 70.00 wt%, 75.00 wt%, 80.00 wt%, 85.00 wt%, 90.00 wt%, 95.00 wt%, etc., and within all ranges and sub-ranges between the above values. It should be appreciated that in embodiments, any of the above ranges can be combined with any other ranges.

Further, the main crystalline phases of the microcrystalline glass substrate include petalite, lithium monosilicate and lithium disilicate, or the main crystalline phases include petalite and lithium disilicate; the average grain size of the microcrystalline glass substrate is 10.00 nm-30.00 nm, preferably 12.00 nm-30.00 nm, preferably 13.60 nm-25.40 nm, preferably 15.20 nm-25.40 nm, and may also be 10.00 nm-20.00 nm, 13.00 nm-30.00 nm, 15.00 nm-30.00 nm, 25.00 nm-30.00 nm, 18.00 nm-27.00 nm, 16.00 nm-28.00 nm, 19.00 nm-26.00 nm, 12.00 nm, 13.60 nm, 14.80 nm, 15.00 nm, 15.20 nm, 15.60 nm, 15.80 nm, 16.70 nm, 16.90 nm, 17.20 nm, 17.40 nm, 18.00 nm, 18.50 nm, 18.60 nm, 19.50 nm, 20.00 nm, 21.20 nm, 22.60 nm, 22.80 nm, 23.00 nm, 23.30 nm, 24.20 nm, 25.00 nm, 25.40 nm, 27.00 nm, 30.00 nm, etc., and within all ranges and sub-ranges between the above values. It should be appreciated that in embodiments, any of the above ranges can be combined with any other ranges.

Further, the main crystalline phases of the microcrystalline glass substrate include petalite, lithium monosilicate and lithium disilicate, or the main crystalline phases include petalite and lithium disilicate; as measured on the surface of the moth-eye-like structure layer on the main surface, when the microcrystalline glass having the moth-eye-like structures has the thickness of 0.64 mm, the transmittance in light with the wavelength of 550.00 nm is greater than or equal to 91.00%, preferably greater than or equal to 93.00%, preferably greater than or equal to 95.00%, and may also be 95.00%-96.00%, 96.00%-97.00%, 97.00%-98.00%, 95.50%-96.50%, 95.50%-99.50%, 91.00%, 92.00%, 93.00%, 94.00%, 95.00%, 95.50%, 96.00%, 96.50%, 97.00%, 97.50%, 98.00%, 98.50%, 99.00% etc., and within all ranges and sub-ranges between the above values. It should be appreciated that in embodiments, any of the above ranges can be combined with any other ranges.

Further, the main crystalline phases of the microcrystalline glass substrate include petalite, lithium monosilicate and lithium disilicate, or the main crystalline phases include petalite and lithium disilicate; the bottom surface of each nanoscale convex structure is in an ellipse-like shape, and has a long axis A and a short axis B, the nanoscale convex structure has a height of h in a vertical direction, and the nanoscale convex structure meets the following relational expression in a space coordinate system $(x_1, y_1, z_1)$:

$$z_1 = h - h\left(\frac{4x_1^2}{A^2} + \frac{4y_1^2}{B^2}\right) \quad (1).$$

In expression (1), midpoints of the long axis A and the short axis B are taken as an origin, A=B or A≠B; $x_1$ is a variable in a direction of the long axis A, $y_1$ is a variable in a direction of the short axis B, and $z_1$ is a variable in a direction of the height h, and $\frac{x_1^2}{A^2} + \frac{y_1^2}{B^2} < 0.25$ ; $0<|x_1|<A/2$, $0<|y_1|<B/2$, and $0<z_1$.

Further, the main crystalline phases of the microcrystalline glass substrate include petalite, lithium monosilicate and lithium disilicate, or the main crystalline phases include petalite and lithium disilicate; the long axis A of the bottom surface of each nanoscale convex structure is within a range of 12.0 nm-65.0 nm, preferably 15.00 nm-63.00 nm, preferably 16.00 nm-60.00 nm, more preferably 18.50 nm-60.00 nm, and preferably 21.40 nm-60.00 nm; the short axis B of the bottom surface of each nanoscale convex structure is within a range of 10.0 nm-63.0 nm, preferably 11.00 nm-61.0 nm, preferably 13.00 nm-60.00 nm, and more preferably 14.70 nm-60.00 nm; and the height h of each nanoscale convex structure in the vertical direction is within a range of 4.50 nm-76.00 nm, preferably 4.85 nm-75.40 nm, preferably 5.00 nm-70.00 nm, and more preferably 6.00 nm-70.00 nm.

Further, the main crystalline phases of the microcrystalline glass substrate include petalite, lithium monosilicate and lithium disilicate, or the main crystalline phases include petalite and lithium disilicate; and in the moth-eye-like structure layer, the distance L between bottom surfaces of two adjacent nanoscale convex structures is 0-155.00 nm; preferably 0-131.00 nm, and more preferably 0-114.00 nm.

Further, the main crystalline phases of the microcrystalline glass substrate include petalite, lithium monosilicate and lithium disilicate, or the main crystalline phases include petalite and lithium disilicate; the crystallinity of the microcrystalline glass substrate is 60.00 wt%-85.00 wt%, preferably 60.00 wt%-80.00 wt%, and preferably 60.00 wt%-70.00 wt%; the average grain size of the microcrystalline glass substrate is 15.00 nm-25.40 nm, preferably 15.20 nm-25.40 nm, preferably 15.60 nm-25.40 nm, and preferably 16.70 nm-25.40 nm; the long axis A of the bottom surface of each nanoscale convex structure is within a range of 14.80 nm-63.00 nm, and preferably 17.50 nm-62.50 nm; the short axis B of the bottom surface of each nanoscale convex structure is within a range of 13.90 nm-61.00 nm, and preferably 15.00 nm-59.00 nm; the height h of each nanoscale convex structure in the vertical direction is within a range of 6.00 nm-75.00 nm; and in the moth-eye-like structure layer, the distance L between bottom surfaces of two adjacent nanoscale convex structures is 0 nm-76.50 nm, preferably 0 nm-75.00 nm.

Further, the main crystalline phases of the microcrystalline glass substrate include petalite, lithium monosilicate and lithium disilicate, or the main crystalline phases include petalite and lithium disilicate; the long axis A of the bottom surface of each nanoscale convex structure is within a range of 14.80 nm-63.00 nm, preferably 17.50 nm-62.50 nm; the short axis B of the bottom surface of each nanoscale convex structure is within a range of 13.90 nm-61.00 nm, preferably 15.00 nm-59.00 nm; the height h of each nanoscale convex structure in the vertical direction is within a range of 6.00 nm-75.00 nm; and in the moth-eye-like structure layer, the distance L between bottom surfaces of two adjacent nanoscale convex structures is 0 nm-76.50 nm, preferably 0 nm-75.00 nm; as measured on the surface of the moth-eye-like structure layer on the main surface, when the microcrystalline glass having the moth-eye-like structures has the thickness of 0.64 mm, the transmittance in 550.00 nm light is 95.00%-99.00%.

The present invention provides use of the above microcrystalline glass having the moth-eye-like structures or the microcrystalline glass having the moth-eye-like structures prepared by the above preparation method in an electronic product, where preferably, the electronic product is one or more of a display glass cover plate, a solar photovoltaic glass substrate, and an LED light-emitting device glass substrate.

Various glass articles in the present invention are tested by the following methods.

XRD test: microcrystalline glass sample sheets are ground into fine glass powder by a pulverizer, with a particle size less than 75 $\mu$m, and then the powder is tested by an X-ray diffractometer (Shimadzu XRD-6100), so as to obtain an XRD diffraction peak curve. The X-ray diffractometer used in the present invention is Shimadzu XRD-6100, a target material is copper, a range of incident angle for test is $2\theta=10$-$80°$, a scanning speed is 0.02-6°/min, a working voltage is 40 kV, and a working current is 30 mA. XRD diffraction data are then analyzed using JADE software to obtain crystalline phases of samples.

Average grain size: using result data obtained by the XRD test, according to Scherrer formula $D=K\lambda/(\beta\cos\theta)$, we can calculate the average grain size of the samples, where $\lambda$ is the X-ray wavelength 0.154056 nm, $\beta$ is full width at half maximum of a diffraction peak, $K=0.89$, and $\theta$ is Bragg diffraction angle. Specifically, a RAW file (diffraction spectrum) output by XRD instrument is subjected to curve fitting in Jade software, Jade outputs a fitting report; according to an angle $2\theta$ value and a Peak FWHM value (full width at half maximum of diffraction peak) corresponding to each diffraction peak in the fitting report, the Peak FWHM value is converted into a radian $\beta=(FWHM/180*3.14)$, and the grain size of each diffraction peak is calculated by $D=K\lambda/(\beta\cos\theta)$ and then averaged, so as to obtain the average grain size.

Test method for crystal content/crystallinity: test result file (RAW format) of the X-ray diffractometer is imported into X-ray diffraction data Rietveld refinement software (such as Gsas, Fullprof, Maud) for fitting and calculation, to obtain the crystal content/crystallinity in the microcrystalline glass sample, a ratio of a peak area of the crystalline phase fitted to all the fitted peak areas is the crystal content, i.e., the crystallinity in the present invention.

Atomic force microscope (AFM) test: 50*50*0.64 mm microcrystalline glass samples are cleaned with alcohol and clean water, and then glass surfaces having the moth-eye-like structure layer are tested using the atomic force microscope (Dimension EDGE), so as to obtain sample surface topographic images of 7 $\mu$m*7 $\mu$m test surfaces, where each surface has 256*256 sampling points. FLT file output by the atomic force microscope instrument is opened in the Gwyddion software, and by a cross-section analysis function, dimension of microscopic morphology of the samples can be measured.

SEM test: microcrystalline glass sheets selected are ultrasonically cleaned and stoved, after the stoving, the samples are sprayed with gold on the surface, and scanned and shot using a thermal field emission scanning electron microscope (SEM) of model Zeiss Sigma 300, so as to obtain surface topographic image of microcrystalline glass with clear grain boundary, magnification being 1.00 KX, 10.00 KX, and 100.00 KX after shooting.

Test of transmittance: it is tested according to the standard "GB/T 7962.12-2010 Test methods of colorless optical glass-Part 12: Spectral internal transmittance". The microcrystalline glass samples to be tested are first cleaned in an ultrasonic cleaning machine, where cleaning conditions include: a cleaning duration of 5-10 min; a cleaning agent used being a commonly used detergent diluted 10 times; a cleaning temperature of 45 °C-65 °C; and a cleaning frequency of 20 KHZ-40 KHZ. Then the transmittance at different wavelengths is tested using a haze meter (Japanese Konica Minolta spectrophotometer CM-3600A).

Method for acquiring a transmittance result in light with the wavelength of 550 nm: the Japanese Konica Minolta spectrophotometer CM-3600A is used to test main surfaces of five parallel samples before etching or surfaces of the moth-eye-like structure layers on the main surfaces of the parallel samples having the moth-eye-like structures after etching, so as to obtain the transmittance of each parallel sample in light with the wavelength of 550 nm before etching and after the etching treatment, then an average value of the transmittance of the five parallel samples in light with the wavelength of 550 nm is calculated, as the transmittance result of the samples to be tested in light with the wavelength of 550 nm.

Thickness of glass: it is measured by a micrometer.

The present invention will be described with specific examples.

The microcrystalline glass substrates used in Examples 1-20 in the following table of the present invention included, in percentage by mass of oxides, the following components: $SiO_2$: 72.50%; $Al_2O_3$: 8.93%; $Li_2O$: 10.33%; $ZrO_2$: 3.08%; $P_2O_5$: 2.13%; $B_2O_3$: 0.86%; and $Na_2O$: 2.17%. It should be appreciated that the composition of the base-material glass for preparing the microcrystalline glass substrate should be the same as that of the microcrystalline glass substrate in terms of percentage by mass of oxides. The following examples used the microcrystalline glass substrate of this composition, but the composition of the microcrystalline glass substrate that can be used in the present invention is not limited to this composition.

Comparative Example 1 provided a common glass substrate (i.e., Qinling glass) from CHONGQING AUREAVIA HI-TECH GLASS CO., LTD., with raw material components in percentage by mass as follows: $SiO_2$: 63.92%; $Al_2O_3$: 18.75%; $Li_2O$: 4.44%; $MgO$: 4.31%; $K_2O$: 2.72%; and $Na_2O$: 5.86%.

Comparative Example 2 provided a microcrystalline glass substrate with zinc magnesium spinel and zirconium dioxide as main crystalline phases, from CHONGQING AUREAVIA HI-TECH GLASS CO., LTD., with raw material components in percentage by mass as follows: $SiO_2$: 32.507%; $Al_2O_3$: 35.505%; $ZrO_2$: 5.454%, $MgO$: 2.976%, $ZnO$: 10.318%, $Na_2O$: 5.849%, $B_2O_3$: 5.131%, and $Ba_2O$: 2.260%.

A process for preparing the base-material glass in Examples 1-20 and Comparative Examples 1-2 in the present invention included: respectively formulating various raw materials in a platinum crucible according to formulations in Examples 1-20 and Comparative Examples 1-2, a total amount of raw materials formulated being 1,000 g, then mixing the raw materials using a V-type mixer for 30 min, and after uniform mixing, adding 5 g of clarifying agent NaCl, then transferring the raw materials to the platinum crucible, subsequently melting in the 1650 °C platinum crucible for 5 h, afterward, pouring resultant into a 300 °C (usually preheated to 200-400 °C) preheated mold for molding, cooling to 900 °C, then annealing in a 500 °C annealing furnace for 12 h, and subsequently cooling with the furnace to room temperature, so as to obtain the base-material glass.

A process for preparing the microcrystalline glass substrate in Examples 1-20 and Comparative Example 2 of the present invention included: performing a thermal treatment on the above base-material glass respectively obtained in a resistance furnace (equipment model: SLX1400-40, manufactured by Shanghai Shengli Instruments Co., Ltd.), a thermal treatment process being performed according to TABLE 1, to finally obtain microcrystalline glass sample bricks. After the microcrystalline glass sample bricks were cut, machined by CNC (computer numerical control, CNC instrument model used in the present invention being RCG500S), and polished in sequence, microcrystalline glass substrates with a thickness of 0.64 mm can be obtained.

The surface etching treatment process in Examples 1-20 of the present invention included: cleaning the microcrystalline glass substrate with a detergent, anhydrous ethanol and clean water in sequence, and blowing water on two surfaces of the microcrystalline glass substrates to dryness with an air duster gun; then placing the treated microcrystalline glass substrate into an etching solution for reacting for 180 min, which reaction process being performed in an ultrasonic cleaning machine and maintaining a temperature of the etching solution at 25±2 °C; after completing the reaction, cleaning with clean water, and then drying with the air duster gun to obtain etched microcrystalline glass having the moth-eye-like structures. In the above, the etching solution used in the surface etching treatment was composed of raw materials in percentage by weight as follows: 0.1% of hydrofluoric acid (concentration of hydrofluoric acid being 40 wt%), 4% of barium sulfate, 1% of cellulose, 1% of silica sand, and 93.90% of deionized water. A method for preparing the etching solution included: adding barium sulfate, cellulose and hydrofluoric acid at a concentration of 40 wt% into deionized water at a stirring speed of 150 r/min, and stirring and mixing uniformly, so as to obtain the etching solution.

In addition, the common glass substrate in Comparative Example 1 and the microcrystalline glass substrate in Comparative Example 2 with zinc magnesium spinel and zirconium dioxide as main crystalline phases were subjected to the etching treatment by the same surface etching treatment process as in Example 1 of the present invention.

Examples 1-20 and Comparative Examples 1-2 in the present invention were all tested according to the above performance test methods; various performance test results are as shown in TABLE 2. The glass substrates in the examples and comparative examples of the present invention all had the thickness of 0.64 mm.

The microcrystalline glass having the moth-eye-like structures obtained after etching the microcrystalline glass substrates of Examples 1-20 of the present invention was subjected to an AFM test respectively. In each example, three test surfaces of 7 $\mu$m* 7 $\mu$m were randomly selected to obtain A, B, h and L values of the nanoscale convex structures of all the test surfaces, with results thereof as shown in TABLE 3, all of which meet the relational expression (1) in the present invention.

TABLE 1

| No. | Thermal treatment process |
|---|---|
| Example 1 | Firstly heating to 560 °C at a rate of 10 °C/min, holding the temperature for 60 min, then heating to 635 °C at a rate of 10 °C/min, and holding the temperature for 5 min. |
| Example 2 | Firstly heating to 560 °C at a rate of 10 °C/min, holding the temperature for 120 min; then heating to 635 °C at a rate of 10 °C/min, and holding the temperature for 10 min. |
| Example 3 | Firstly heating to 560 °C at a rate of 10 °C/min, holding the temperature for 240 min; then heating to 635 °C at a rate of 10 °C/min, and holding the temperature for 15 min. |
| Example 4 | Firstly heating to 560 °C at a rate of 10 °C/min, holding the temperature for 240 min, then heating to 650 °C at a rate of 10 °C/min, and holding the temperature for 15 min. |
| Example 5 | Firstly heating to 560 °C at a rate of 10 °C/min, holding the temperature for 240 min; then heating to 635 °C at a rate of 10 °C/min, and holding the temperature for 25 min. |
| Example 6 | Firstly heating to 560 °C at a rate of 10 °C/min, holding the temperature for 90 min; then heating to 635 °C at a rate of 10 °C/min, and holding the temperature for 60 min. |
| Example 7 | Firstly heating to 560 °C at a rate of 10 °C/min, holding the temperature for 120 min; then heating to 635 °C at a rate of 10 °C/min, and holding the temperature for 60 min. |
| Example 8 | Firstly heating to 560 °C at a rate of 10 °C/min, holding the temperature for 240 min; then heating to 635 °C at a rate of 10 °C/min, and holding the temperature for 90 min. |
| Example 9 | Firstly heating to 560 °C at a rate of 10 °C/min, holding the temperature for 240 min; then heating to 635 °C at a rate of 10 °C/min, and holding the temperature for 135 min. |
| Example 10 | Firstly heating to 560 °C at a rate of 10 °C/min, holding the temperature for 240 min; then heating to 635 °C at a rate of 10 °C/min, and holding the temperature for 150 min. |
| Example 11 | Firstly heating to 560 °C at a rate of 10 °C/min, holding the temperature for 240 min; then heating to 635 °C at a rate of 10 °C/min, and holding the temperature for 180 min. |
| Example 12 | Firstly heating to 560 °C at a rate of 10 °C/min, holding the temperature for 90 min, then heating to 660 °C at a rate of 10 °C/min, and holding the temperature for 5 min. |
| Example 13 | Firstly heating to 560 °C at a rate of 10 °C/min, holding the temperature for 90 min, then heating to 660 °C at a rate of 10 °C/min, and holding the temperature for 10 min. |
| Example 14 | Firstly heating to 560 °C at a rate of 10 °C/min, holding the temperature for 90 min, then heating to 660 °C at a rate of 10 °C/min, and holding the temperature for 15 min. |
| Example 15 | Firstly heating to 560 °C at a rate of 10 °C/min, holding the temperature for 120 min, then heating to 650 °C at a rate of 10 °C/min, and holding the temperature for 30 min. |
| Example 16 | Firstly heating to 560 °C at a rate of 10 °C/min, holding the temperature for 120 min, then heating to 650 °C at a rate of 10 °C/min, and holding the temperature for 50 min. |
| Example 17 | Firstly heating to 560 °C at a rate of 10 °C/min, holding the temperature for 120 min, then heating to 650 °C at a rate of 10 °C/min, and holding the temperature for 80 min. |
| Example 18 | Firstly heating to 560 °C at a rate of 10 °C/min, holding the temperature for 240 min, then heating to 660 °C at a rate of 10 °C/min, and holding the temperature for 90 min. |
| Example 19 | Firstly heating to 560 °C at a rate of 10 °C/min, holding the temperature for 240 min, then heating to 660 °C at a rate of 10 °C/min, and holding the temperature for 135 min. |
| Example 20 | Firstly heating to 560 °C at a rate of 10 °C/min, holding the temperature for 240 min, then heating to 660 °C at a rate of 10 °C/min, and holding the temperature for 150 min. |

(continued)

| No. | Thermal treatment process |
|---|---|
| Comparative Example 2 | Firstly heating to 800 °C at a rate of 10 °C/min, holding the temperature for 120 min, then heating to 900 °C at a rate of 10 °C/min, and holding the temperature for 240 min. |

TABLE 2

| No. | Thickness (mm) | Main crystalline phase | Crystallinity | Average grain size (nm) | Initial transmittance $TR_{550}$ in light with wavelength of 550 nm | Transmittance $TR_{550}$ in 550 nm light after etching |
|---|---|---|---|---|---|---|
| Example 1 | 0.64 | petalite, lithium monosilicate, lithium disilicate | 12.24 wt% | 12.2 | 90.76% | 91.12% |
| Example 2 | 0.64 | petalite, lithium monosilicate, lithium disilicate | 42.52 wt% | 13.6 | 88.86% | 91.88% |
| Example 3 | 0.64 | petalite, lithium monosilicate, lithium disilicate | 45.62 wt% | 14.8 | 89.33% | 92.73% |
| Example 4 | 0.64 | petalite, lithium monosilicate, lithium disilicate | 60.51 wt% | 15.2 | 90.33% | 95.79% |
| Example 5 | 0.64 | petalite, lithium monosilicate, lithium disilicate | 61.84 wt% | 15.8 | 90.75% | 96.08% |
| Example 6 | 0.64 | petalite, lithium monosilicate, lithium disilicate | 63.74 wt% | 16.9 | 90.80% | 96.25% |
| Example 7 | 0.64 | petalite, lithium monosilicate, lithium disilicate | 66.72 wt% | 18.1 | 90.88% | 96.55% |
| Example 8 | 0.64 | petalite, lithium monosilicate, lithium disilicate | 80.44 wt% | 15.6 | 90.47% | 97.63% |
| Example 9 | 0.64 | petalite, lithium monosilicate, lithium disilicate | 82.21 wt% | 18.5 | 90.73% | 98.03% |
| Example 10 | 0.64 | petalite, lithium monosilicate, lithium disilicate | 83.47 wt% | 20.1 | 90.58% | 97.80% |

(continued)

| No. | Thickness (mm) | Main crystalline phase | Crystallinity | Average grain size (nm) | Initial transmittance TR$_{550}$ in light with wavelength of 550 nm | Transmittance TR$_{550}$ in 550 nm light after etching |
|---|---|---|---|---|---|---|
| Example 11 | 0.64 | petalite, lithium monosilicate, lithium disilicate | 94.72 wt% | 24.4 | 90.42% | 97.22% |
| Example 12 | 0.64 | petalite, lithium disilicate | 35.64 wt% | 15.6 | 89.82% | 93.05% |
| Example 13 | 0.64 | petalite, lithium disilicate | 44.84 wt% | 16.8 | 90.14% | 93.99% |
| Example 14 | 0.64 | petalite, lithium disilicate | 55.64 wt% | 17.2 | 90.35% | 94.63% |
| Example 15 | 0.64 | petalite, lithium disilicate | 60.81 wt% | 17.4 | 90.66% | 96.25% |
| Example 16 | 0.64 | petalite, lithium disilicate | 67.68 wt% | 18.6 | 90.99% | 97.08% |
| Example 17 | 0.64 | petalite, lithium disilicate | 70.25 wt% | 22.6 | 91.12% | 97.49% |
| Example 18 | 0.64 | petalite, lithium disilicate | 80.14 wt% | 19.5 | 90.96% | 98.87% |
| Example 19 | 0.64 | petalite, lithium disilicate | 84.77 wt% | 22.8 | 90.73% | 98.02% |
| Example 20 | 0.64 | petalite, lithium disilicate | 95.47 wt% | 25.1 | 90.53% | 97.97% |
| Comparative Example 1 | 0.64 | None | None | None | 91.90% | 63.29% |
| Comparative Example 2 | 0.64 | zinc magne-sium spinel, zirconium di-oxide | 40% | 5.9 nm | 89.89% | 50.08% |

TABLE 3

| No. | A (nm) | B (nm) | h (nm) | L (nm) |
|---|---|---|---|---|
| Example 1 | 15.5~41.4 | 14.8~37.4 | 5.48~35.14 | 0~155 |
| Example 2 | 16.7~49.5 | 15.9~47.6 | 6.42~37.41 | 0~124 |
| Example 3 | 15.9~47.2 | 14.7~46.2 | 7.02~38.65 | 0~104 |
| Example 4 | 16.4~48.7 | 15.7~46.2 | 6.25~47.6 | 0~74.4 |

(continued)

| No. | A (nm) | B (nm) | h (nm) | L (nm) |
|---|---|---|---|---|
| Example 5 | 17.5~46.4 | 16.2~43.4 | 6.41~56.7 | 0~73.2 |
| Example 6 | 17.5~51.7 | 15.3~44.2 | 6.74~61.4 | 0~71.1 |
| Example 7 | 18.5~62.8 | 18.0~57.4 | 6.75~73.2 | 0~67.4 |
| Example 8 | 14.8~46.5 | 13.9~40.5 | 6.85~54.1 | 0~33.5 |
| Example 9 | 17.2~49.5 | 16.8~49.1 | 6.31~58.7 | 0~35.4 |
| Example 10 | 20.9~51.7 | 20.5~50.1 | 5.85~62.1 | 0~34.2 |
| Example 11 | 24.5~61.7 | 23.9~60.7 | 5.01~51.2 | 0~31.4 |
| Example 12 | 12.8~62.5 | 11.8~57.7 | 4.85~35.2 | 0~131 |
| Example 13 | 17.8~51.2 | 17.5~50.6 | 5.24~37.5 | 0~114 |
| Example 14 | 15.6~59.4 | 14.3~55.7 | 4.85~45.6 | 0~95 |
| Example 15 | 22.9~55.4 | 21.8~52.0 | 6.74~43.66 | 0~76.5 |
| Example 16 | 24.2~57.3 | 21.4~55.6 | 6.23~51.2 | 0~62.5 |
| Example 17 | 21.4~57.6 | 20.4~54.2 | 5.45~56.3 | 0~54.4 |
| Example 18 | 26.4~61.6 | 21.9~57.6 | 6.75~75.4 | 0~35.5 |
| Example 19 | 28.5~61.6 | 24.8~58.6 | 7.52~67.7 | 0~31.9 |
| Example 20 | 24.7~61.6 | 22.2~57.6 | 8.41~69.8 | 0~30.1 |

It can be seen from Example 2 and Comparative Examples 1-2 that the present invention prepared the microcrystalline glass having the moth-eye-like structures and high transmittance in the visible light range by performing the surface etching treatment with the etching solution on the microcrystalline glass substrate with petalite and lithium silicate as main crystalline phases.

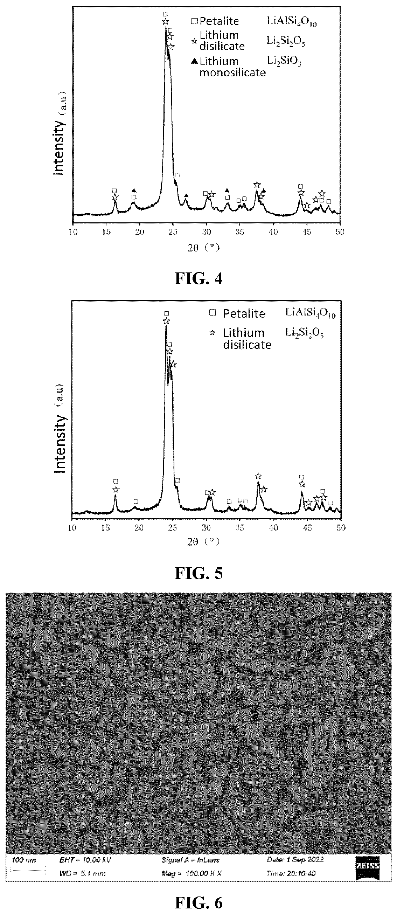

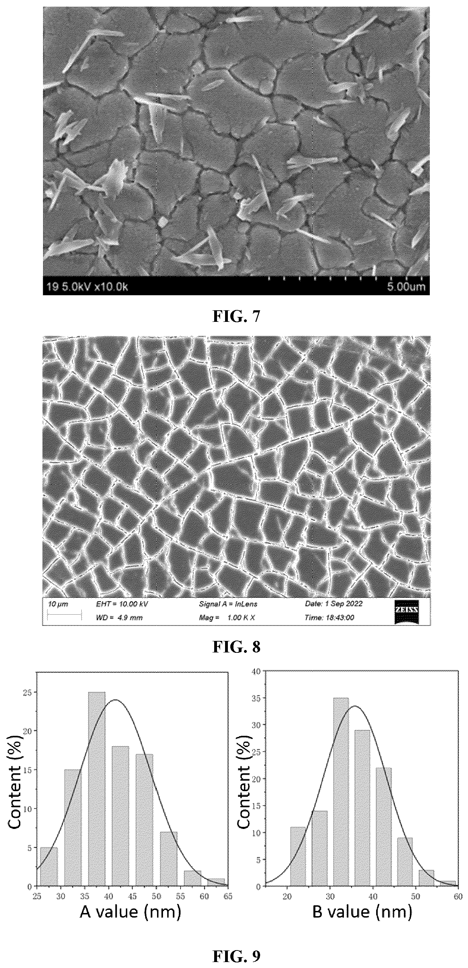

It can be seen from FIG. 6 and FIG. 8 that although Comparative Example 2 provided the microcrystalline glass substrate having zinc magnesium spinel and zirconium dioxide crystal as main crystalline phases, such microcrystalline glass substrate failed to form the moth-eye-like structures after the etching treatment, which indicates that not all microcrystalline glass substrates can form the moth-eye-like structures through the etching treatment. Moreover, it can be seen from FIG. 8 that after the etching treatment on the microcrystalline glass substrate of Comparative Example 2, crystalline phases that can be retained did not have a high crystallinity, and the average grain size was small, so that the retained crystalline phases were very sparsely distributed, failed to bring about the antireflection effect to Comparative Example 2, but on the contrary, greatly reduced the original transmittance of the microcrystalline glass substrate in Comparative Example 2.

The main crystalline phases in Examples 4-11 were petalite, lithium monosilicate and lithium disilicate, the crystallinity was 60.51 wt%-94.72 wt%, the average grain size was 15.20 nm-24.40 nm, and when the thickness was 0.64 mm, the initial transmittance $TR_{550}$ in light with the wavelength of 550 nm was about 90%, but after the etching treatment, when the microcrystalline glass having the moth-eye-like structures prepared in Examples 4-11 had the thickness of 0.64 mm, the transmittance $TR_{550}$ in light with the wavelength of 550 nm was remarkably increased, and reached 95% or above, being 95.79%-98.03%, obviously superior to the transmittance of the microcrystalline glass before the etching treatment.

The main crystalline phases in Examples 15-20 were petalite and lithium disilicate, the crystallinity was 60.81 wt%-95.47 wt%, the average grain size was 17.4nm-25.10nm, and when the thickness was 0.64 mm, the initial transmittance $TR_{550}$ in light with the wavelength of 550 nm was about 90%, and the highest transmittance was only 91.12%, but after the etching treatment, when the microcrystalline glass having the moth-eye-like structures prepared in Examples 15-20 had the thickness of 0.64 mm, the transmittance $TR_{550}$ in light with the wavelength of 550 nm was remarkably increased, and reached 96% or above, being 96.25%-98.87%, obviously superior to the transmittance of the microcrystalline glass before the etching treatment.

It can be seen from TABLE 3 that the nanoscale convex structures on the surface of the microcrystalline glass having the moth-eye-like structures obtained in Examples 1-20 of the present invention met the relational expression (1) in the present invention in the space coordinate system; and the microcrystalline glass having the moth-eye-like structures, when having the thickness of 0.64 mm, had high transmittance in the 550 nm light.

Finally, it should be noted that the above embodiments are merely used for illustrating the technical solutions of the present invention, rather than limiting the technical solutions, and those ordinarily skilled in the art should understand that modifications or equivalent substitutions made to the technical solutions in the present invention, without departing from the purpose and scope of the technical solutions, should be all covered within the scope of the claims of the present invention.

**INDUSTRIAL APPLICABILITY**

The present invention accidently finds that a moth-eye-like layer of a specific structure can be obtained on the microcrystalline glass surface by performing the surface etching treatment on the microcrystalline glass substrate with a specific crystalline phase system using the etching solution, and further the microcrystalline glass having moth-eye-like structures can be obtained, and the microcrystalline glass having the moth-eye-like structures has high transmittance in a visible light range.

The present invention finds that the obtained moth-eye-like structures, i.e., the nanoscale convex structures, meet the specific relational expression in the space coordinate system $(x_1, y_1, z_1)$.

By adjusting the crystallinity of the microcrystalline glass substrate, the average grain size and other structures, or by adjusting the long axis A, the short axis B, and the height h of the nanoscale convex structures in the moth-eye-like structures and the distance L between the bottom surfaces of adjacent nanoscale convex structures, the transmittance of the microcrystalline glass having the moth-eye-like structures obtained after the etching treatment in the visible light range can be improved.

The present invention provides a method for producing the microcrystalline glass having the moth-eye-like structures in a large scale with a simple process at a low cost, and such preparation method enables the moth-eye-like structures to be integrated with the microcrystalline glass substrate, and can effectively prevent the moth-eye-like structures from falling off.

**Claims**

1.    A microcrystalline glass having moth-eye-like structures, **characterized by** comprising a microcrystalline glass substrate and a moth-eye-like structure layer provided on a main surface of the microcrystalline glass substrate, and the moth-eye-like structure layer being integrated with the microcrystalline glass substrate, wherein the moth-eye-like structure layer comprises a plurality of nanoscale convex structures; the moth-eye-like structure layer is obtained by performing a surface etching treatment on the main surface of the microcrystalline glass substrate using an etching solution; and main crystalline phases of the microcrystalline glass substrate comprise petalite and lithium silicate.

2.    The microcrystalline glass having the moth-eye-like structures according to claim 1, wherein the main crystalline phases comprise petalite, lithium monosilicate and lithium disilicate, or the main crystalline phases comprise petalite and lithium disilicate.

3.    The microcrystalline glass having the moth-eye-like structures according to claim 1 or 2, wherein the microcrystalline glass having the moth-eye-like structures has the moth-eye-like structure layer on two main surfaces.

4.    The microcrystalline glass having the moth-eye-like structures according to any one of claims 1-3, wherein a crystallinity of the microcrystalline glass substrate is greater than or equal to 30.00 wt%, preferably greater than or equal to 35.00 wt%, further preferably greater than or equal to 40.00 wt%, preferably 35.00 wt%-95.00 wt%, preferably 40.00 wt%-95.00 wt%, preferably 50.00 wt%-95.00 wt%, and more preferably 60.00-95.00 wt%; and/or an average grain size of the microcrystalline glass substrate is 10.00 nm-30.00 nm, preferably 12.00 nm-30.00 nm, preferably 13.60 nm-25.40 nm, and more preferably 15.20 nm-25.40 nm.

5.    The microcrystalline glass having the moth-eye-like structures according to any one of claims 1-4, wherein the etching solution comprises, in percentage by mass, components as follows: 0.01%-16.00% of an acid solution, 0%-18.00% of an additive, and balance being water; and
preferably, the etching solution meets at least one of (1)-(3):

(1) the acid solution comprising hydrofluoric acid, and more preferably, the hydrofluoric acid having a concentration greater than or equal to 40.00 wt%;
(2) the additive comprising one or more of barium sulfate, silica sand, and cellulose; more preferably, the barium sulfate having a particle size less than 2 mm, and purity greater than 98%; more preferably, the silica sand having a particle size of 0.01-2.5 mm, and purity greater than 99.9%; more preferably, the cellulose having a molecular weight of 50,000-150,000, and a proportion of crystalline phase greater than 60 wt%; and
(3) the additive comprising 0-6.00% of barium sulfate, 0-6.00% of silica sand and 0-6.00% of cellulose.

6. The microcrystalline glass having the moth-eye-like structures according to any one of claims 1-5, wherein as measured on a surface of the moth-eye-like structure layer on the main surface, when the microcrystalline glass having the moth-eye-like structures has a thickness of 0.64 mm, transmittance in light with a wavelength of 550.00 nm is greater than or equal to 91.00%, preferably greater than or equal to 93.00%, preferably greater than or equal to 95.00%, preferably greater than or equal to 95.50%, preferably greater than or equal to 96.00%, more preferably 91.00%-99.00%, and more preferably 95.00%-99.00%.

7. The microcrystalline glass having the moth-eye-like structures according to any one of claims 1-6, wherein the microcrystalline glass substrate comprises, in percentage by mass of oxides, components as follows:

$SiO_2$: 70.00%-80.00%;
$Al_2O_3$: 5.00%-10.00%;
$Li_2O$: 5.00%-15.00%;
$ZrO_2$: 0%-5.00%;
$P_2O_5$: 0%-5.00%;
$B_2O_3$: 0%-5.00%;
$Na_2O$: 0%-5.00%.

8. The microcrystalline glass having the moth-eye-like structures according to any one of claims 1-7, wherein the main crystalline phases of the microcrystalline glass substrate comprise petalite, lithium monosilicate and lithium disilicate; and the microcrystalline glass substrate meets at least one of (1)-(3):

(1) a crystallinity of the microcrystalline glass substrate being 60.00 wt%-85.00 wt%, preferably 60.00 wt%-80.00 wt%, and preferably 60.00 wt%-70.00 wt%;
(2) an average grain size of the microcrystalline glass substrate being 15.0 nm-25.40 nm, preferably 15.20 nm-25.40 nm, preferably 15.60 nm-25.40 nm, and preferably 16.70 nm-25.40 nm; and
(3) as measured on a surface of the moth-eye-like structure layer on the main surface, when a thickness of the microcrystalline glass having the moth-eye-like structures being 0.64 mm, transmittance in light with a wavelength of 550.00 nm being 95.00%-99.00%.

9. The microcrystalline glass having the moth-eye-like structures according to any one of claims 1-7, wherein the main crystalline phases of the microcrystalline glass substrate comprise petalite and lithium disilicate, and the microcrystalline glass substrate meets at least one of (1)-(3):

(1) a crystallinity of the microcrystalline glass substrate being 60.00 wt%-85.00 wt%, preferably 60.00 wt%-80.00 wt%, and preferably 60.00 wt%-70.00 wt%;
(2) an average grain size of the microcrystalline glass substrate being 15.0 nm-25.40 nm, preferably 15.20 nm-25.40 nm, and more preferably 15.60 nm-25.40 nm; and
(3) as measured on a surface of the moth-eye-like structure layer on the main surface, when a thickness of the microcrystalline glass having the moth-eye-like structures being 0.64 mm, transmittance in light with a wavelength of 550.00 nm being 95.00%-99.00%.

10. A preparation method for the microcrystalline glass having the moth-eye-like structures according to any one of claims 1-9, **characterized by** comprising a step of: performing the surface etching treatment on the main surface of the microcrystalline glass substrate using the etching solution so as to obtain the microcrystalline glass having the moth-eye-like structures.

11. The preparation method for the microcrystalline glass having the moth-eye-like structures according to claim 10, wherein the etching solution comprises, in percentage by mass, components as follows: 0.01%-16.00% of an acid solution, 0%-18.00% of an additive, and balance being water; and
preferably, the etching solution meets at least one of (1)-(3):

(1) the acid solution comprising hydrofluoric acid, and more preferably, the hydrofluoric acid having a concentration greater than or equal to 40.00 wt%;
(2) the additive comprising one or more of barium sulfate, silica sand, and cellulose; more preferably, the barium sulfate having a particle size less than 2 mm, and purity greater than 98%; more preferably, the silica sand having a particle size of 0.01-2.5 mm, and purity greater than 99.9%; more preferably, the cellulose having a molecular weight of 50,000-150,000, and a proportion of crystalline phase greater than 60 wt%; and

(3) the additive comprising 0-6.00% of barium sulfate, 0-6.00% of silica sand and 0-6.00% of cellulose.

12. The preparation method for the microcrystalline glass having the moth-eye-like structures according to any one of claims 10-11, wherein the surface etching treatment comprises: performing an ultrasonic etching reaction on the microcrystalline glass substrate in the etching solution, and after ending the reaction, taking out the microcrystalline glass substrate, and performing a cleaning treatment and a drying treatment in sequence, so as to obtain the microcrystalline glass having the moth-eye-like structures; preferably, a temperature of the etching solution is 10-80 °C; and preferably, the ultrasonic etching reaction is performed for 10-180 min.

13. The preparation method for the microcrystalline glass having the moth-eye-like structures according to any one of claims 10-12, wherein the main crystalline phases of the microcrystalline glass substrate comprise petalite, lithium monosilicate and lithium disilicate, or comprise petalite and lithium disilicate.

14. The preparation method for the microcrystalline glass having the moth-eye-like structures according to any one of claims 10-13, wherein a crystallinity of the microcrystalline glass substrate is greater than or equal to 30.00 wt%, preferably greater than or equal to 35.00 wt%, further preferably greater than or equal to 40.00 wt%, preferably 35.00 wt%-95.00 wt%, preferably 40.00 wt%-95.00 wt%, preferably 50.00 wt%-95.00 wt%, and more preferably 60.00-95.00 wt%.

15. The preparation method for the microcrystalline glass having the moth-eye-like structures according to any one of claims 10-14, wherein an average grain size of the microcrystalline glass substrate is 10.00 nm-30.00 nm, preferably 12.00 nm-30.00 nm, preferably 13.60 nm-25.40 nm, and more preferably 15.20 nm-25.40 nm.

16. The preparation method for the microcrystalline glass having the moth-eye-like structures according to any one of claims 10-15, wherein as measured on a surface of the moth-eye-like structure layer on the main surface, when the microcrystalline glass having the moth-eye-like structures has a thickness of 0.64 mm, transmittance in light with a wavelength of 550.00 nm is greater than or equal to 91.00%, preferably greater than or equal to 93.00%, preferably greater than or equal to 95.00%, preferably greater than or equal to 95.50%, preferably greater than or equal to 96.00%, more preferably 91.00%-99.00%, and more preferably 95.00%-99.00%.

17. The preparation method for the microcrystalline glass having the moth-eye-like structures according to any one of claims 10-16, wherein the microcrystalline glass substrate comprises, in percentage by mass of oxides, components as follows:

$SiO_2$: 70.00%-80.00%;
$Al_2O_3$: 5.00%-10.00%;
$Li_2O$: 5.00%-15.00%;
$ZrO_2$: 0%-5.00%;
$P_2O_5$: 0%-5.00%;
$B_2O_3$: 0%-5.00%;
$Na_2O$: 0%-5.00%.

18. The preparation method for the microcrystalline glass having the moth-eye-like structures according to any one of claims 10-17, wherein the main crystalline phases of the microcrystalline glass substrate comprise petalite, lithium monosilicate and lithium disilicate; and the microcrystalline glass substrate meets at least one of (1)-(3):

(1) a crystallinity of the microcrystalline glass substrate being 60.00 wt%-85.00 wt%, preferably 60.00 wt%-80.00 wt%, and preferably 60.00 wt%-70.00 wt%;

(2) an average grain size of the microcrystalline glass substrate being 15.0 nm-25.40 nm, preferably 15.20 nm-25.40 nm, preferably 15.60 nm-25.40 nm, and preferably 16.70 nm-25.40 nm; and

(3) as measured on a surface of the moth-eye-like structure layer on the main surface, when a thickness of the microcrystalline glass having the moth-eye-like structures being 0.64 mm, transmittance in light with a wavelength of 550.00 nm being 95.00%-99.00%.

19. The preparation method for the microcrystalline glass having the moth-eye-like structures according to any one of claims 10-17, wherein the main crystalline phases of the microcrystalline glass substrate comprise petalite and lithium disilicate, and the microcrystalline glass substrate meets at least one of (1)-(3):

> (1) a crystallinity of the microcrystalline glass substrate being 60.00 wt%-85.00 wt%, preferably 60.00 wt%-80.00 wt%, and preferably 60.00 wt%-70.00 wt%;
> (2) an average grain size of the microcrystalline glass substrate being 15.00 nm-25.40 nm, preferably 15.20 nm-25.40 nm, and more preferably 15.60 nm-25.40 nm; and
> (3) as measured on a surface of the moth-eye-like structure layer on the main surface, when a thickness of the microcrystalline glass having the moth-eye-like structures being 0.64 mm, transmittance in light with a wavelength of 550.00 nm being 95.00%-99.00%.

20. Use of the microcrystalline glass having the moth-eye-like structures according to any one of claims 1-9 or the microcrystalline glass having the moth-eye-like structures prepared by the preparation method according to any one of claims 10-19 in an electronic product, **characterized in that** preferably, the electronic product is one or more of a display glass cover plate, a solar photovoltaic glass substrate, and an LED light-emitting device glass substrate.

21. An electronic product, **characterized by** comprising the microcrystalline glass having the moth-eye-like structures according to any one of claims 1-9 or the microcrystalline glass having the moth-eye-like structures prepared by the preparation method according to any one of claims 10-19.

**FIG. 1**

**FIG. 2**

**FIG. 3**

FIG. 4

FIG. 5

FIG. 6

**FIG. 7**

**FIG. 8**

**FIG. 9**

EP 4 600 228 A1

## INTERNATIONAL SEARCH REPORT

| | International application No. |
|---|---|
| | **PCT/CN2024/078420** |

**A. CLASSIFICATION OF SUBJECT MATTER**

C03C15/00(2006.01)i; C03C10/04(2006.01)i; C03C10/12(2006.01)i; G02B1/118(2015.01)i; G02B1/11(2015.01)i

According to International Patent Classification (IPC) or to both national classification and IPC

**B. FIELDS SEARCHED**

Minimum documentation searched (classification system followed by classification symbols)

IPC:C03C; G02B

Documentation searched other than minimum documentation to the extent that such documents are included in the fields searched

Electronic data base consulted during the international search (name of data base and, where practicable, search terms used)

CNTXT; ENTXT; WPABS; CNKI; ISI: 玻璃, 表面, 蛾眼, 蚀刻, 减反射, 纳米结构, 透锂长石, 硅酸锂, 结晶度, 晶粒尺寸, 粒径, 透光率, glass, surface, moth eye, etch, anti-reflection, nano-structure, petalite, lithium silicate, crystallinity, grain size, partical size, light transmitance

**C. DOCUMENTS CONSIDERED TO BE RELEVANT**

| Category* | Citation of document, with indication, where appropriate, of the relevant passages | Relevant to claim No. |
|---|---|---|
| Y | CN 113698107 A (OPPO GUANGDONG MOBILE TELECOMMUNICATIONS CORP., LTD.) 26 November 2021 (2021-11-26)<br>description, paragraphs 0004, 0006, 0008, 0030, 0037 and 0100 | 1-21 |
| Y | CN 115073010 A (CHONGQING AUREAVIA HI-TECH GLASS CO., LTD. et al.) 20 September 2022 (2022-09-20)<br>description, paragraphs 0010, 0023, 0025-0026, 0049 and 0051-0052 | 1-21 |
| Y | CN 113248152 A (CHANGSHU JIAHE DISPLAY TECHNOLOGY CO., LTD.) 13 August 2021 (2021-08-13)<br>claims 1-3 | 1-21 |
| Y | CN 115490427 A (CHANGSHU JIAHE DISPLAY TECHNOLOGY CO., LTD.) 20 December 2022 (2022-12-20)<br>claims 1 and 3-5 | 1-21 |
| A | CN 114890681 A (SHENZHEN BING XING PHOTOELECTRIC TECHNOLOGY CO., LTD.) 12 August 2022 (2022-08-12)<br>claims 1-3 | 1-21 |

☑ Further documents are listed in the continuation of Box C. ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 March 2024** | **26 April 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

28

## INTERNATIONAL SEARCH REPORT

| International application No. |
|---|
| **PCT/CN2024/078420** |

### C. DOCUMENTS CONSIDERED TO BE RELEVANT

| Category* | Citation of document, with indication, where appropriate, of the relevant passages | Relevant to claim No. |
|---|---|---|
| A | CN 113496653 A (UTI INC.) 12 October 2021 (2021-10-12)<br>    entire document | 1-21 |
| A | KR 20150089606 A (IKAIST CO., LTD.) 05 August 2015 (2015-08-05)<br>    entire document | 1-21 |
| A | US 2021163285 A1 (KOREA INSTITUTE OF SCIENCE AND TECHNOLOGY) 03 June 2021 (2021-06-03)<br>    entire document | 1-21 |
| A | US 6359735 B1 (FRAUNHOFER GESELLSCHAFT ZUR FORDERUNG DER ANGEWANDTEN FORSCHUNG E.V.) 19 March 2002 (2002-03-19)<br>    entire document | 1-21 |

Form PCT/ISA/210 (second sheet) (July 2022)

## INTERNATIONAL SEARCH REPORT
### Information on patent family members

International application No.

**PCT/CN2024/078420**

| Patent document cited in search report | | | Publication date (day/month/year) | Patent family member(s) | | | Publication date (day/month/year) |
|---|---|---|---|---|---|---|---|
| CN | 113698107 | A | 26 November 2021 | None | | | |
| CN | 115073010 | A | 20 September 2022 | None | | | |
| CN | 113248152 | A | 13 August 2021 | None | | | |
| CN | 115490427 | A | 20 December 2022 | None | | | |
| CN | 114890681 | A | 12 August 2022 | None | | | |
| CN | 113496653 | A | 12 October 2021 | US | 2021315116 | A1 | 07 October 2021 |
| | | | | US | 11627679 | B2 | 11 April 2023 |
| | | | | KR | 20210123977 | A | 14 October 2021 |
| | | | | KR | 102359719 | B1 | 09 February 2022 |
| | | | | KR | 102167404 | B1 | 20 October 2020 |
| | | | | TW | 202143192 | A | 16 November 2021 |
| | | | | TWI | 805993 | B | 21 June 2023 |
| KR | 20150089606 | A | 05 August 2015 | KR | 101568838 | B1 | 13 November 2015 |
| US | 2021163285 | A1 | 03 June 2021 | EP | 3828148 | A1 | 02 June 2021 |
| | | | | US | 11753297 | B2 | 12 September 2023 |
| | | | | KR | 20210067391 | A | 08 June 2021 |
| | | | | KR | 102272710 | B1 | 05 July 2021 |
| US | 6359735 | B1 | 19 March 2002 | EP | 0965059 | A1 | 22 December 1999 |
| | | | | EP | 0965059 | B1 | 25 May 2005 |
| | | | | DE | 59812817 | D1 | 30 June 2005 |
| | | | | DE | 19708776 | C1 | 18 June 1998 |
| | | | | JP | 2001517319 | A | 02 October 2001 |
| | | | | ATE | 296455 | T1 | 15 June 2005 |
| | | | | WO | 9839673 | A1 | 11 September 1998 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310164166